# EUROPEAN PATENT APPLICATION

(11) **EP 1 657 136 A1**
(43) Date of publication of application: **17.05.2006**
(21) Application number: 04771420.9
(22) Date of filing: 09.08.2004
(51) Int. Cl.: B62D 5/07, B62D 6/00

(54) **POWER STEERING DEVICE AND METHOD OF CONTROLLING THE POWER STEERING DEVICE**

(30) Priority: 19.08.2003 JP 2003294817; 16.02.2004 JP 2004037705
(71) Applicant: Hitachi, Ltd., Tokyo 100-8280 (JP)
(72) Inventor: Sasaki, Mitsuo, Atsugi-shi, Kanagawa 243-8510 (JP); Yokota, Tadaharu, Atsugi-shi, Kanagawa 243-8510 (JP); Sakaki, Toshimitsu, Atsugi-shi, Kanagawa 243-8510 (JP); Hiramoto, Michiya, Atsugi-shi, Kanagawa 243-8510 (JP)
(74) Representative: Weber, Joachim
(86) International application number: PCT/JP2004/011433
(87) International publication number: WO 2005/016722

(57) **Abstract**

A steering system includes a hydraulic power cylinder 5 that assists a steering force of a rack-and-pinion mechanism 4, and a first hydraulic pressure supply mechanism 8 having a first trochoid pump 23 selectively supplying hydraulic pressure to two hydraulic pressure chambers 15a and 15b of the hydraulic power cylinder via first and second fluid passages 6 and 7, and a first electric motor 24 for the first trochoid pump. When the first hydraulic pressure supply mechanism becomes failed, a second hydraulic pressure supply mechanism 11 is operated responsively to a command signal from a control unit 14 to selectively supply hydraulic pressure via third and fourth fluid passages to either one of the hydraulic pressure chambers.

Thus, it is possible to positively apply a steering assist force by means of the second hydraulic pressure supply mechanism 11, thereby reducing a driver's operating force applied to a steering wheel.

## Description

### TECHNICAL FIELD

The present invention relates to a power steering device (a power steering system) enabling steering assist force application by operating a hydraulic power cylinder responsively to the magnitude of steering torque, which torque is output from a steering mechanism of an automotive vehicle, and specifically to a control method of the power steering system.

### BACKGROUND ART

A power steering system disclosed in the following patent publication designated by "Document 1" is generally known as this type of power steering system.

The power steering system disclosed in this document is comprised of a steering shaft mounting thereon a steering wheel, an output shaft linked to the lower end of the steering shaft, a rack-and-pinion mechanism installed on the lower end of the output shaft for steering of steered road wheels, a hydraulic power cylinder linked to the rack of the rack-and-pinion mechanism, and a reversible pump provided to selectively supplying working fluid into the first hydraulic chamber arranged as the left-hand half of the power cylinder or into the second hydraulic chamber arranged as the right-hand half of the power cylinder. The first hydraulic chamber is connected via a first fluid passage to the pump outlet, whereas the second hydraulic chamber is connected via a second fluid passage to the pump outlet. Also provided is an electromagnetic valve disposed in a communication passage interconnecting the first and second fluid passages, for opening and closing the communication passage.

When a normal steering operation is made by means of the steering wheel for left or right turns during vehicle driving, a detector, which detects a steering torque, outputs a passage closure signal, indicative of closing action of the communication passage, via a control circuit into the electromagnetic valve. At the same time, working fluid is selectively supplied into either one of the first and second hydraulic chambers by way of normal rotation or reverse rotation of the reversible pump for the purpose of steering assist force application.

Also provided is a system-failure monitoring circuit that monitors a system failure in the power steering system. When the system-failure monitoring circuit determines that a power-steering-system failure occurs, the communication passage is opened by the electromagnetic valve such that the first and second hydraulic chambers are communicated with each other via the communication passage opened, thus enabling manual steering.
Document 1: Japanese Patent Provisional Publication No. 2002-145087

### DISCLOSURE OF THE INVENTION

### TASK SOLVED BY THE INVENTION

In the power steering system disclosed in the previously-described Japanese document, the system can be shifted to the manual steering mode in presence of a system failure, for example, in presence of a reversible-pump failure, however, a positive steering assist cannot be made during the manual steering mode. This means a large magnitude of steering force to be produced by the driver.
To avoid this, an auxiliary steering-assist source may be further added to the hydraulic power steering system. For instance, torque produced by an electric motor, constructing a part of the steering mechanism, may be used as a steering assist force. More concretely, torque produced by the motor can be applied directly to the steering shaft by mechanically linking a gear mechanism, which is connected to the output shaft of the motor, to the steering shaft.
However, in case of the auxiliary steering-assist method as previously discussed, during rotation of the motor, a fluid flow resistance of working fluid in the hydraulic circuit of the hydraulic power cylinder of the failed power steering system acts as an undesirable load resistance to rotation of the motor. This leads to a problem of an insufficient steering assist force.

### MEANS TO SOLVE THE TASK

Therefore, in view of the previously-described technical task of the prior art, the present invention as defined in claim 1 is characterized by a power steering system comprising a hydraulic power cylinder that assists a steering force of a steering mechanism turning steered road wheels for steering, a first hydraulic pressure supply means including a reversible pump relatively supplying hydraulic pressure to first and second hydraulic chambers of the hydraulic power cylinder via first and second fluid passages, associated with the respective hydraulic chambers, and an electric motor driving the reversible pump in a normal-rotational direction or in a reverse-rotational direction, a steering-state detection means that detects a driver's steering state, a control unit that outputs a command signal to the motor responsively to the driver's steering state detected by the steering-state detection means, and a second hydraulic pressure supply means selectively supplying hydraulic pressure to either one of the first and second hydraulic chambers of the hydraulic power cylinder.

The invention as defined in claim 2 is characterized by a failure detection means, which is provided to detect a failure in the first hydraulic pressure supply means.

The invention as defined in claim 13 is directed to a control method of the power steering system, and
characterized in that, when a failure in the first hydraulic pressure supply means is detected by failure detection means, the control unit initiates an operative step of the second hydraulic pressure supply means so that the second hydraulic pressure supply means comes into operation.

According to the invention as defined in claim 1, when the first hydraulic pressure supply means becomes failed, it is possible to positively apply a steering assist force by means of the second hydraulic pressure supply means. This contributes to a reduction in operating physical force to be applied to a steering wheel by the driver.

Additionally, in a similar manner to the first hydraulic pressure supply means, as a medium of pressure transmission the second hydraulic pressure supply means uses working fluid supplied into the first and second fluid passages and the hydraulic power cylinder, rather than electric power source. Thus, even in case of the use of a hydraulic pressure source (e.g., an oil pump) having a comparatively small discharge capacity, it is possible to provide an adequate steering assist force.

According to the invention as defined in claim 2, it is possible to detect a failure in the first hydraulic pressure supply means by virtue of the failure detection means. This enables smooth switching control of pressure supply means from the first to second hydraulic pressure supply means.

According to the invention as defined in claim 13, it is possible to provide the same operation and effects as the invention as defined in claim 1.

### BRIEF DESCRIPTION OF THE DRAWINGS

[Figure 1] Fig. 1 is a schematic system diagram showing a power steering system of the first embodiment, made according to the invention.
[Figure 2] Fig. 2 is a block diagram showing a control action achieved by a control unit incorporated in the system of the first embodiment.
[Figure 3] Fig. 3 is a basic control flow chart executed within the control unit.
[Figure 4] Fig. 4 is a control flow chart concerning the first stage.
[Figure 5] Fig. 5 is a control flow chart concerning the second stage.
[Figure 6] Fig. 6 is a control flow chart concerning the third stage.
[Figure 7] Fig. 7 is a control flow chart concerning the fourth stage.
[Figure 8] Fig. 8 is a control flow chart showing a modification of the control flow of the fourth stage.
[Figure 9] Fig. 9 is a control flow chart concerning the fifth stage.
[Figure 10] Fig. 10 is a control flow chart showing a modification of the control flow of the fifth stage.
[Figure 11] Fig. 11 is a control flow chart concerning the sixth stage.
[Figure 12] Fig. 12 is a flow chart showing a system failure diagnosis based on a detected current value of electric current applied to each of the first and second electric motors incorporated in the system of the first embodiment.
[Figure 13] Fig. 13 is a flow chart showing a pump-failure diagnosis or a pump-abnormality diagnosis, based on a torque signal from a torque sensor and a sensor signal from a current sensor.
[Figure 14] Fig. 14 is a flow chart showing a pump-failure diagnosis or a pump-abnormality diagnosis, based on an electric-motor speed.
[Figure 15] Fig. 15 is a schematic system diagram showing a power steering system of the second embodiment.
[Figure 16] Fig. 16 is a control flow chart concerning the fifth stage of the control program applicable to the second embodiment.
[Figure 17] Fig. 17 is a schematic system diagram showing a power steering system of the third embodiment.
[Figure 18] Fig. 18 is a schematic system diagram showing a power steering system of the fourth embodiment.
[Figure 19] Fig. 19 is a schematic system diagram showing a power steering system of the fifth embodiment.
[Figure 20] Fig. 20 is a schematic system diagram showing a power steering system of the sixth embodiment.
[Figure 21] Fig. 21 is a schematic system diagram showing a power steering system of the seventh embodiment.
[Figure 22] Fig. 22 is a schematic system diagram showing a power steering system of the eighth embodiment.
[Figure 23] Fig. 23 is a schematic system diagram showing a power steering system of the ninth embodiment.
[Figure 24] Fig. 24 is a control flow chart executed within the system of the ninth embodiment.
[Figure 25] Fig. 25 is another control flow chart executed within the system of the ninth embodiment.
[Figure 26] Fig. 26A shows time charts concerning waveforms of pulse pressures respectively produced by the first and second trochoid pumps phase-shifted from each other, whereas Fig. 26B is a characteristic diagram showing a pulse pressure produced by the hydraulic power cylinder.
[Figure 27] Fig. 27 is a schematic system diagram showing a power steering system of the tenth embodiment.
[Figure 28] Fig. 28 is a schematic system diagram showing a power steering system of the eleventh embodiment.
[Figure 29] Fig. 29 is a schematic system diagram showing a power steering system of the twelfth embodiment.
[Figure 30] Fig. 30 is a schematic system diagram showing a power steering system of the thirteenth embodiment.
[Figure 31] Fig. 31 is a schematic system diagram showing a power steering system of the fourteenth embodiment.
[Figure 32] Fig. 32 is a control flow chart executed within the system of the fourteenth embodiment.
[Figure 33] Fig. 33 is another control flow chart executed within the system of the fourteenth embodiment.
[Figure 34] Fig. 34 is a schematic diagram showing a power steering system of the fifteenth embodiment.
[Figure 35] Fig. 35 is a control flow chart executed within the system of the fifteenth embodiment.
[Figure 36] Fig. 36 is a schematic diagram showing a power steering system of the sixteenth embodiment.

### DESCRIPTION OF THE PREFERRED EMBODIMENTS

Each of the embodiments of the power steering systems of the present invention will be hereinafter described in detail in reference to the drawings.

### [FIRST EMBODIMENT]

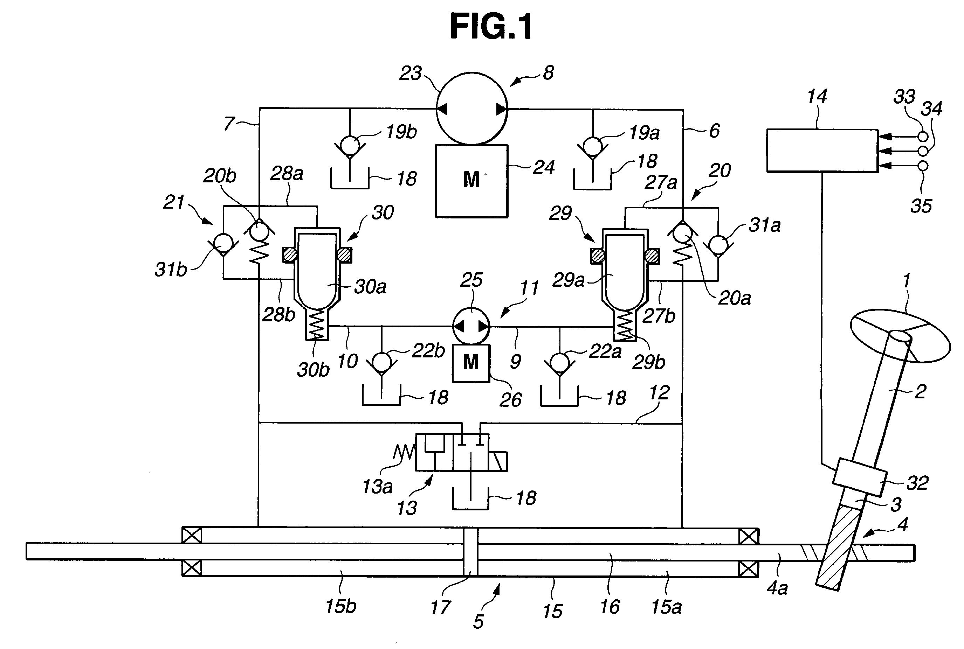

Fig. 1 schematically shows the power steering system of the first embodiment. The system of the first embodiment is mainly comprised of a steering shaft 2 to which a steering wheel 1 is fixedly connected, a rack-and-pinion mechanism 4 serving as a steering mechanism (a steering gear mechanism) installed on an output shaft 3 linked to a lower end of steering shaft 2, a hydraulic power cylinder 5 provided to render assistance to a driver's operating force applied to the steering wheel, a first hydraulic pressure supply mechanism 8 serving as the first hydraulic pressure supply means for selectively supplying working fluid pressure to hydraulic power cylinder 5 via either one of first and second fluid passages 6 and 7, a second hydraulic pressure supply mechanism 11 arranged parallel to first hydraulic pressure supply mechanism 8 and serving as the second hydraulic pressure supply means for selectively supplying working fluid pressure to hydraulic power cylinder 5 via either one of third and fourth fluid passages 9 and 10 respectively connected to and arranged in parallel with the first and second fluid passages 6 and 7, a communication passage 12 interconnecting first and second fluid passages 6 and 7, a fail-safe valve 13 that establishes fluid communication through the communication passage 12 or blocks fluid communication through the communication passage, and a control unit 14 that controls operation of each of first and second hydraulic pressure supply mechanisms 8 and 11, and fail-safe valve 13.

In the previously-noted hydraulic power cylinder 5, a piston rod 16, mechanically linked to a rack 4a of rack-and-pinion mechanism 4, is provided in a manner so as to penetrate the interior space of a tubular cylinder 15, which extends in a cross direction of the vehicle body. A piston 17, which is slidable in tubular cylinder 15, is fixedly connected to piston rod 16. The interior space of tubular cylinder 15 is divided into first and second hydraulic pressure chambers 15a and 15b by piston 17.

First and second fluid passages 6 and 7 are connected at first ends to respective inlet-and-outlet ports of a first trochoid pump 23 (serving as a reversible pump described later) included in first hydraulic pressure supply mechanism 8. The second end of first fluid passage 6 is connected to first hydraulic pressure chamber 15a, whereas the second end of second fluid passage 7 is connected to second hydraulic pressure chamber 15b. A check-valve type inlet valve 19a, through which working fluid is inducted from a reservoir tank 18 into first fluid passage 6, is connected to the first end of the first fluid passage, whereas a check-valve type inlet valve 19b, through which working fluid is inducted from reservoir tank 18 into second fluid passage 7, is connected to the first end of the second fluid passage. Inlet valves 19a and 19b are basically designed to compensate for a lack in working fluid to be supplied to each of hydraulic pressure chambers 15a and 15b by inducting supplementary working fluid from the low-pressure side reservoir tank 18 arranged in the opposite side of the high-pressure side reservoir tank connected to a high-pressure side of first and second fluid passages 6 and 7 into which working fluid is discharged.

Third and fourth fluid passages 9 and 10 are connected at first ends to respective inlet-and-outlet ports of a second trochoid pump 25 (serving as a reversible pump described later) included in second hydraulic pressure supply mechanism 11. The second end of third fluid passage 9 is connected via a first fluid-passage directional control valve 20 to first fluid passage 6, whereas the second end of fourth fluid passage 10 is connected via a second fluid-passage directional control valve 21 to second fluid passage 7.

Additionally, a check-valve type inlet valve 22a, through which working fluid is inducted from reservoir tank 18 into third fluid passage 9, is connected to the first end of the third fluid passage, whereas a check-valve type inlet valve 22b, through which working fluid is inducted from reservoir tank 18 into fourth fluid passage 10, is connected to the first end of the fourth fluid passage. Inlet valves 22a and 22b also have the same function as the previously-noted inlet valves 19a and 19b.

Furthermore, the line lengths and line diameters of first and third fluid passages 6 and 9 are set, so that a pulsation of hydraulic pressure produced by first trochoid pump 23 and a pulsation of hydraulic pressure produced by second trochoid pump 25 cancel out each other. The line lengths and line diameters of second and fourth fluid passages 7 and 10 are set, so that a pulsation of hydraulic pressure produced by the first trochoid pump and a pulsation of hydraulic pressure produced by the second trochoid pump cancel out each other.

The previously-noted first hydraulic pressure supply mechanism 8 is comprised of first reversible trochoid pump 23 and a first electric motor 24 serving as an electromotor, which drives first trochoid pump 23.

On the other hand, the previously-noted second hydraulic pressure supply mechanism 11 is comprised of second reversible trochoid pump 25 and a second electric motor 26 serving as an electromotor, which drives second trochoid pump 25. A discharge capacity of second trochoid pump 25 is set to be less than that of first trochoid pump 23.

For pumping action, each of first and second electric motors 24 and 26 can be driven in the normal-rotational direction or in the reverse-rotational direction in response to a command signal or a driving signal output from control unit 14. By virtue of the pumping action, for instance, working fluid in first hydraulic pressure chamber 15a is supplied into second hydraulic pressure chamber 15b, thus enabling steering assist force application.

First fluid-passage directional control valve 20 includes a one-way first check valve 20a disposed substantially in a middle of first fluid passage 6 for permitting free flow of working fluid selectively discharged from either one of the two ports of first trochoid pump 23, namely the first port, in a single direction that working fluid is introduced into first hydraulic pressure chamber 15a, a first differential pressure valve 29 disposed between the second end of third fluid passage 9 and each of branch lines 27a and 27b respectively connected to both ends of first check valve 20a, that is, upstream and downstream sides of the first check valve, and a check valve 31a provided in the opposite side of first differential pressure valve 29 of branch lines 27a and 27b for preventing any flow in the direction of introduction of working fluid into first hydraulic pressure chamber 15a. Likewise, second fluid-passage directional control valve 21 includes a one-way second valve 20b disposed substantially in a middle of second fluid passage 7 for permitting free flow of working fluid selectively discharged from either one of the ports of first trochoid pump 23, namely the second port, in a single direction that working fluid is introduced into second hydraulic pressure chamber 15b, a second differential pressure valve 30 disposed between the second end of fourth fluid passage 10 and each of branch lines 28a and 28b respectively connected to both ends of second check valve 20b, that is, upstream and downstream sides of the second check valve, and a check valve 31b provided in the opposite side of second differential pressure valve 30 of branch lines 28a and 28b for preventing any flow in the direction of introduction of working fluid into second hydraulic pressure chamber 15b.

First differential pressure valve 29 is comprised of a valve element 29a provided to open or close third fluid passage 9 via branch lines 27a and 27b by a differential pressure between upstream and downstream ends of first check valve 20a, and a spring member 29b permanently biasing valve element 29a in a valve-opening direction, namely, in a direction establishing of fluid communication between third fluid passage 9 and first fluid passage 6. Likewise, second differential pressure valve 30 is comprised of a valve element 30a provided to open and close fourth fluid passage 10 via branch lines 28a and 28b by a differential pressure between upstream and downstream ends of second check valve 20b, and a spring member 30b permanently biasing valve element 30a in a valve-opening direction, namely, in a direction establishing of fluid communication between fourth fluid passage 10 and second fluid passage 7.

Fail-safe valve 13 is comprised of a two-port two-position electromagnetic valve, which is designed to open or close communication passage 12 depending on both of a command signal, i.e., an electric current generated from control unit 14, and a spring force of a coil spring 13a built in the valve housing.

During valve-closing operation with an electric current applied from control unit 14 to the electromagnetic valve, communication passage 12 is blocked. In contrast, in presence of a steering system failure, electric current supply is stopped and thus the communication passage is fully opened by way of the spring force of coil spring 13a. As a result of this, depending on a rotational direction or a steering direction of steering wheel 1, working fluid in reservoir tank 18 is selectively delivered via communication passage 12 into either one of first and second hydraulic pressure chambers 15a and 15b, thereby ensuring a manual steering mode.

Control unit 14 is configured to receive input information, that is, various sensor signals from a torque sensor 32, serving as a steering-state detection means that detects a steering torque of steering shaft 2, a vehicle speed sensor 33 that detects vehicle speed and generates a vehicle-speed indicative signal, a crank angle sensor 34 that detects engine speed and generates an engine-speed indicative signal, and the like. The control unit controls first electric motor 24 responsively to the input informational data signals during a normal operating mode, thus rendering assistance to a driver's operating force applied to the steering wheel. The control unit also receives a switch signal from a torque switch 35 capable of detecting a steering state. In other words, in order to detect a steering state, a sensor signal from the torque sensor is substituted for a switch signal from the torque switch.

Control unit 14 includes a system-failure detecting circuit (simply, a failure detector) that detects a failure in each of first hydraulic pressure supply mechanism 8, second hydraulic pressure supply mechanism 11, torque sensor 32, and the other equipments included in the power steering system. The control unit is configured to execute steering assist control processing (described later) responsively to a detection signal from the failure detector.

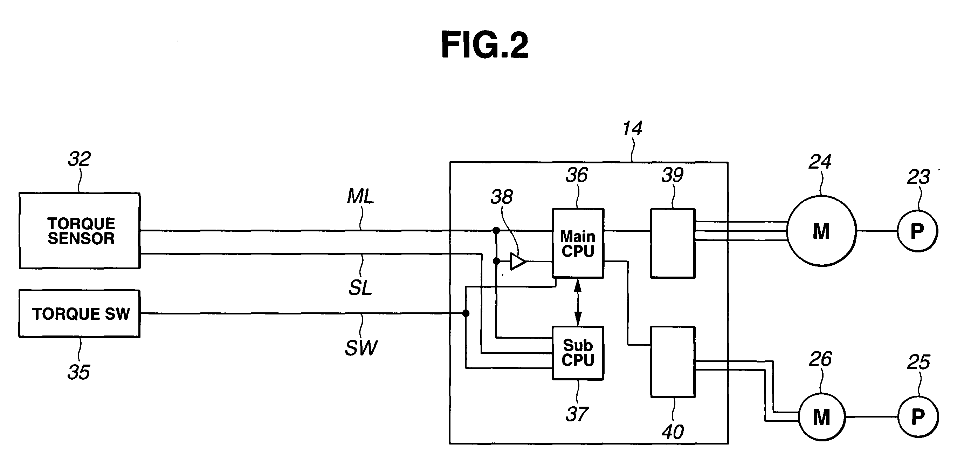

Hereinafter described briefly in reference to Fig. 2 is the basic electric circuit of control unit 14 for controlling the first and second hydraulic pressure supply mechanisms 8 and 11.

That is to say, control unit 14 is comprised of a computer section, a steering torque signal section, an electric-motor driving section, and an electric-motor and pump section (simply, a motor-and-pump section).

The previously-noted computer section is comprised of a main computer (a main central processing unit) 36 and a sub-computer (a sub central processing unit) 37. These CPUs 36 and 37 are communicated with each other via a data link, for mutual communication of necessary information.

The previously-noted steering torque signal section is comprised of torque sensor 32, and torque switch 35 that generates an alternate steering-torque indicative signal similar to a steering torque signal from torque sensor 32. As redundant output, torque sensor 32 generates both of a main torque signal and a sub torque signal. The main torque signal is output through a main signal line ML to main computer 36, while the sub torque signal is output through a sub signal line SL to sub computer 37.

On the other hand, the alternate steering-torque indicative signal from torque switch 35 is output through a torque-switch line SW to both of main computer 36 and sub computer 37. Therefore, the steering torque signal section is constructed by a triplet system generating three steering-torque indicative signals, namely the main torque signal, the sub torque signal, and the alternate steering-torque indicative signal.

Within the steering-torque signal input section of the control unit, the signal transmitted through main signal line ML is input into both of main computer 36 and sub computer 37, without changing its signal multiplying factor. At the same time, the signal transmitted through the main signal line is multiplied by a predetermined signal multiplying factor via an amplifier 38, and then the multiplied signal is also input into main computer 36. The signal transmitted through sub signal line SL is input into sub computer 37, without changing its signal multiplying factor. On the other hand, the signal transmitted through the SW line is input into both of main computer 36 and sub computer 37, without changing its signal multiplying factor.

The previously-noted electric-motor driving section is constructed by a duplex system, which is comprised of first and second electric-motor driving circuits 39 and 40, both configured independently of each other to receive respective command signals from main computer 36.

Within the previously-noted motor-and-pump section, first electric-motor driving circuit 39 and first electric motor 24 are connected to each other via a harness, so as to provide a driving power source that drives first trochoid pump 23. In a similar manner, second electric-motor driving circuit 40 and second electric motor 26 are connected to each other via a harness, so as to provide a driving power source that drives second trochoid pump 25.

Each of main computer 36 and sub computer 37 computes or arithmetically processes a current value of electric current needed for steering assist, based on steering-torque indicative signals (steering torque values) generated from both of torque sensor 32 and torque switch 35.

As a current-value indicative command signal, main computer 36 outputs a signal corresponding to the computed current value to first electric-motor driving circuit 39. And then, a driving signal is output from the first electric-motor driving circuit to first electric motor 24, so as to drive the first trochoid pump 23.

During the normal operating mode, main computer 36 is configured to receive the steering torque signal from torque sensor 32 only via a signal line branched from the main signal line without passing through amplifier 38, for the previously-discussed arithmetic processing. Motor control for first electric motor 24 is executed based on the computed current value.

On the other hand, as a current-value indicative command signal, sub computer 37 outputs a signal corresponding to the computed current value to second electric-motor driving circuit 40. And then, a driving signal is output from the second electric-motor driving circuit to second electric motor 26, so as to drive the second trochoid pump 25.

Sub computer 37 comes into operation as an alternative computer only when a failure in main computer 36 and/or a failure in first electric-motor driving circuit 39 occurs, in such a manner as to enable application of a sub assist force by way of second electric motor 26.

Hereinafter described briefly is the mechanical operation of the power steering system, under two conditions, that is, under a normal condition where first hydraulic pressure supply mechanism 8 is operating normally, and under a n abnormal condition where a failure in the first hydraulic pressure supply mechanism occurs.

When steering wheel 1 is rotated during constant-speed driving at a given vehicle speed under a condition where first hydraulic pressure supply mechanism 8 is operating normally, first electric motor 24 is driven in the normal-rotational direction or in the reverse-rotational direction responsively to a control current (or a drive signal), which is generated from first electric-motor driving circuit 39 and whose current value is determined based on the computed current value processed within main computer 36 based on the input informational data signals from torque sensor 32, vehicle speed sensor 33, crank angle sensor 34, and torque switch 35. During rotation of the first electric motor in the normal-rotational direction or in the reverse-rotational direction, first trochoid pump 23 is also rotated in the normal-rotational direction or in the reverse-rotational direction, such that hydraulic pressure is supplied to either one of first and second fluid passages 6 and 7 via either one of the first and second ports of the first trochoid pump.

At this time, regarding first and second fluid-passage directional control valves 20 and 21, either one of first and second check valves 20a and 20b is selectively opened under hydraulic pressure. The pressure level of hydraulic pressure in the upstream side of the selectively opened one of first and second check valves 20a and 20b becomes higher than that of the downstream side, to create a differential pressure. Owing to the differential pressure, either one of valve elements 29a and 30a of differential pressure valves 29 and 30, associated with the opened check valve, is closed. As a result, hydraulic pressure in first and second fluid passages 6 and 7 is rapidly supplied to first hydraulic pressure chamber 15a or to second hydraulic pressure chamber 15b, so that piston rod 16 is moved to the left or to the right via piston 17, thereby rendering assistance to a steering force applied to rack-and-pinion mechanism 4.

At this time, second hydraulic pressure supply mechanism 11 is kept inoperative and thus conditioned in a stand-by state.

In contrast, when the first electric motor 24 of first hydraulic pressure supply mechanism 8 becomes failed owing to some factors, control unit 14 stops electric current supply of driving current to first electric motor 24. Simultaneously, the control unit operates to drive second trochoid pump 25, that is, second electric motor 26 in the normal-rotational direction or in the reverse-rotational direction, so that hydraulic pressure can be selectively supplied from either one of the ports of the second pump to the third fluid passage 9 or to the fourth fluid passage 10.

At this time, the pressure level of hydraulic pressure in the upstream sides of first and second fluid passages 6 and 7, that is, the pressure level of hydraulic pressure in the upstream side of each of branch lines 27a, 27b, 28a, and 28b is relatively lower than that of the downstream side. In other words, the pressure level of hydraulic pressure in the downstream side becomes relatively high. Thus, valve elements 29a and 30a of differential pressure valves 29 and 30 are kept opened by way of the spring forces of spring members 29b and 30b. Thus, fluid communication between the downstream side of first fluid passage 6 and third fluid passage 9 is established, and fluid communication between the downstream side of second fluid passage 7 and fourth fluid passage 10 is established. As a result, working fluid (hydraulic pressure) selectively discharged from either one of the ports of second trochoid pump 25, is selectively supplied to either one of first and second hydraulic pressure chambers 15a and 15b. The supplied hydraulic pressure acts as a steering assist force.

Part of hydraulic pressure of working fluid flown from third fluid passage 9 via differential pressure valve 29 into branch line 27b, tends to push and open check valve 31a, and thus tends to be introduced into the hydraulic circuit of first hydraulic pressure supply mechanism 8. However, with the first trochoid pump 23 kept in its stopped state, there is no risk of leakage of hydraulic pressure through first trochoid pump 23 into the opposite hydraulic circuit, thus avoiding a steering assist force produced by second hydraulic pressure supply mechanism 11 from being greatly affected.

When the first and second hydraulic pressure supply mechanisms 8 and 11 have been both failed, control unit 14 stops electric current supply of driving current to each of the first and second electric motors. At this time, fail-safe valve 13 functions to establish fluid communication between reservoir tank 18 and communication passage 12 by virtue of the spring force of coil spring 13a, such that hydraulic pressure can be supplied from reservoir tank 18 selectively to the first hydraulic pressure chamber 15a or to the second hydraulic pressure chamber 15b, thus ensuring manual steering.

### [BASIC CONTROL ROUTINE]

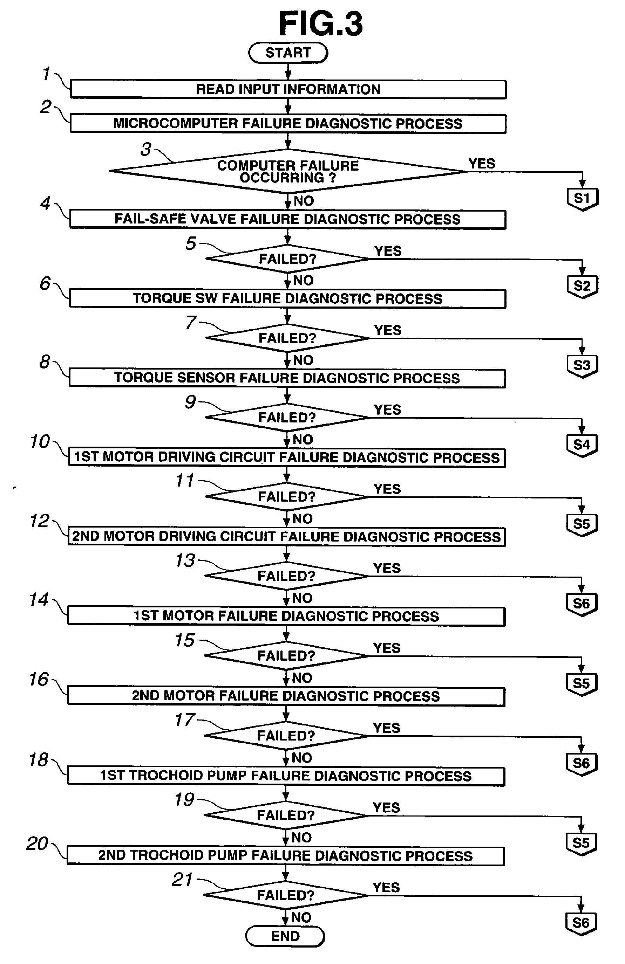

Details of failure detection performed by the failure detector of control unit 14 and concrete countermeasure control against a system failure, such as a failure in at least one of equipments constructing the power steering system, are hereunder described in reference to the flow charts shown in Figs. 3-11.

Referring now to Fig. 3, there is shown a flow chart regarding a general flow for failure-detection and failure-diagnosis on each of system equipments, executed within the failure detector. The control routine is repeatedly executed as time-triggered interrupt routines to be triggered every time intervals such as 1 millisecond.

First of all, at step 1, input informational data signals from various sensors, namely the engine speed indicative signal, vehicle-speed indicative signal, the torque sensor signal and the like, are read.

At step 2, a failure diagnostic process is executed for making a diagnosis on a failure in main computer 36 functioning as a brain of the power steering system and a failure in sub computer 37 also functioning as a brain of the power steering system. At step 3, a check is made to determine whether main computer 36 and sub computer 37 are both failed. When it is determined that computers 36 and 37 are both failed, the routine shifts to the first stage S1 (described later). Conversely when it is determined that the computers are operating normally, the routine advances to step 4.

At step 4, a failure diagnostic process is executed for making a diagnosis on a failure in fail-safe valve 13 itself, for fail-safe purposes in the case that a failure in at least one of system equipments occurs. Thereafter, at step 5, a check is made to determine whether fail-safe valve 13 is failed. When it is determined that the fail-safe valve is failed (abnormal), the routine shifts to the second stage S2 described later. Conversely when it is determined that the fail-safe valve is unfailed (normal), the routine proceeds to step 6.

At step 6, a failure diagnostic process is executed for making a diagnosis on a failure in torque switch 35 used as a back-up steering torque detector. At step 7, a check is made to determine whether torque switch 35 is failed. When it is determined that the torque switch is failed (abnormal), the routine shifts to the third stage S3. Conversely when it is determined that the torque switch is unfailed (normal), the routine proceeds to step 8.

At step 8, a failure diagnostic process is executed for making a diagnosis on a failure in torque sensor 32 used as an ordinary steering torque detector. At step 9, a check is made to determine whether torque sensor 32 is failed. When it is determined that the torque sensor is failed (abnormal), the routine shifts to the fourth stage S4. Conversely when it is determined that the torque sensor is unfailed (normal), the routine proceeds to step 10.

At step 10, a failure diagnostic process is executed for making a diagnosis on a failure in first electric-motor driving circuit 39. At step 11, a check is made to determine whether first electric-motor driving circuit 39 is failed. When it is determined that the first electric-motor driving circuit is failed, the routine shifts to the fifth stage S5. Conversely when it is determined that the first electric-motor driving circuit is unfailed (normal), the routine proceeds to step 12.

At step 12, a failure diagnostic process is executed for making a diagnosis on a failure in second electric-motor driving circuit 40. At step 13, a check is made to determine whether second electric-motor driving circuit 40 is failed. When it is determined that the second electric-motor driving circuit is failed, the routine shifts to the sixth stage S6. Conversely when it is determined that the second electric-motor driving circuit is normal, the routine proceeds to step 14.

At step 14, a failure diagnostic process is executed for making a diagnosis on a failure in first electric motor 24. At step 15, a check is made to determine whether first electric motor 24 is failed. When it is determined that the first electric motor is failed, the routine shifts to the fifth stage S5. Conversely when it is determined that the first electric motor is normal, the routine proceeds to step 16.

At step 16, a failure diagnostic process is executed for making a diagnosis on a failure in second electric motor 26. At step 17, a check is made to determine whether second electric motor 26 is failed. When it is determined that the second electric motor is failed, the routine shifts to the sixth stage S6. Conversely when it is determined that the second electric motor is normal, the routine proceeds to step 18.

At step 18, a failure diagnostic process is executed for making a diagnosis on a failure in first trochoid pump 23. At step 19, a check is made to determine whether first trochoid pump 23 is failed. When it is determined that the first trochoid pump is failed, the routine shifts to the fifth stage S5. Conversely when it is determined that the first trochoid pump is normal, the routine proceeds to step 20.

At step 20, a check is made to determine whether second trochoid pump 25 is failed. When it is determined that the second trochoid pump is failed, the routine shifts to the sixth stage S6. Conversely when it is determined that the second trochoid pump is normal, the routine terminates.

Hereinafter described are concrete subroutines of the first to sixth stages S1-S6.

### [1ST STAGE S1]

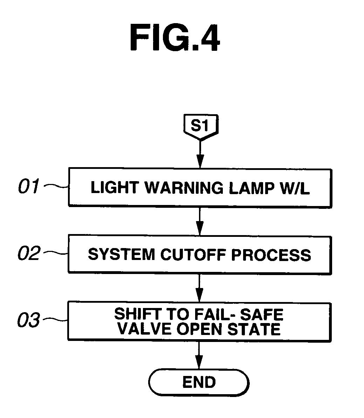

As set forth above, when a computer failure in each of main computer 36 and sub computer 37 takes place, a shift to the first stage S1 occurs. As shown in Fig. 4, at step 01 of the first stage, in order to inform the driver of a fault condition of each of computers 36-37, a warning lamp (W/L) installed on the instrument cluster panel is lighted.

Owing to such a computer failure in each of computers 36-37, it is impossible to normally operate each of trochoid pumps 23-24. Thus, at step 02, a system cutoff process of the steering assist system is executed. Concretely, an electric current cutoff process for current supply to each of computers 36-37 is executed.

At the same time, at step 03, current supply to the electromagnetic valve constructing fail-safe valve 13 is cut off, such that the valve element is shifted to its valve open state by the spring force of coil spring 13a.

As a result of this, first and second hydraulic pressure chambers 15a and 15b of hydraulic power cylinder 5 become communicated with reservoir tank 18 through communication passage 12. This ensures manual steering.

### [2ND STAGE S2]

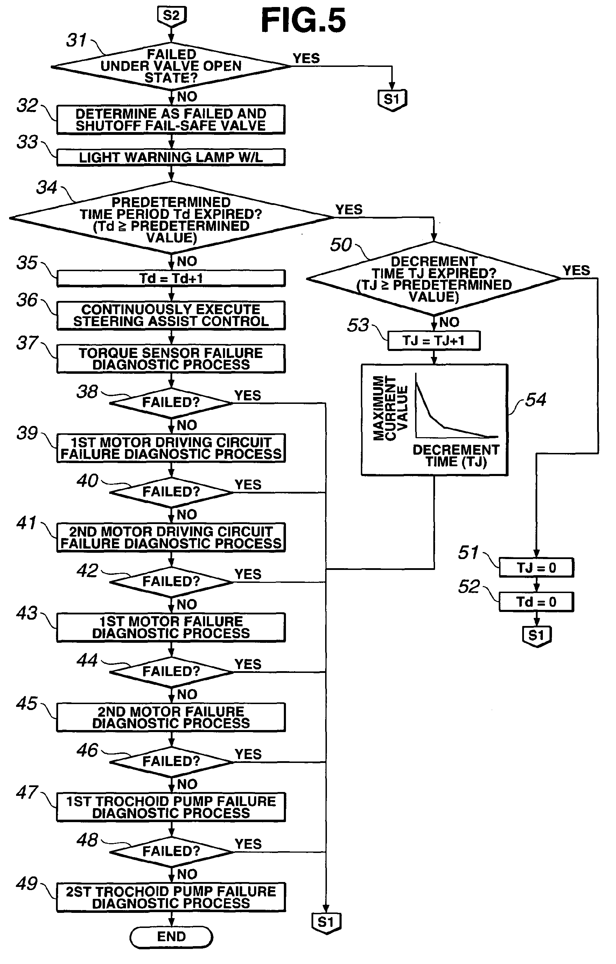

Next, assuming that the previously-noted step 5 determines that fail-safe valve 13 is failed (abnormal), the routine shifts to the second stage S2. As shown in Fig. 5, at step 31 of the second stage, a check is made to determine whether fail-safe valve 13 has been failed under its valve open state. When the answer to step 31 is affirmative (YES), that is, the fail-safe valve is failed under the valve open state, the program returns to the first stage S1.
Conversely when the answer to step 31 is negative (NO), the subroutine proceeds to step 32. Assuming that step 32 determines that fail-safe valve 13 is failed under its valve closed state, and thus fluid communication with reservoir tank 18 is blocked, the subroutine proceeds to step 33 so as to inform the driver of a fault condition of the fail-safe valve kept closed (shutoff), while lighting the warning lamp.

Next, at step 34, a check is made to determine, based on a count value of a timer, whether a predetermined time period Td, such as approximately five seconds, has expired. When the predetermined time period has not yet expired, the subroutine proceeds to step 35 where the predetermined time period Td is incremented by "1", because fail-safe valve 13 is conditioned in the valve shutoff state. Thereafter, at step 36, the usual steering assist control is continuously executed by means of first hydraulic pressure supply mechanism 8.

After this, at steps 37 through 49, the same control routine as steps 8 through 20 shown in the flow chart of Fig. 3, are executed. Assuming that each of failure diagnostic steps 37-49 determines that a failure occurs, the subroutine returns to the first stage S1.

Conversely when step 34 determines that predetermined time period Td has expired, the subroutine proceeds to step 50 where a check is made to determine, based on a count value of a timer, if a decrement time TJ has reached a predetermined time (i.e., TJ≥predetermined value). When the predetermined time has been reached, the subroutine proceeds to step 51 where decrement time TJ is reset to "0" (i.e., TJ=0). At step 52, predetermined time period Td is reset to "0" (i.e., Td=0), and thereafter the subroutine shifts to the first stage S1. That is, through the two steps, the count values of the timers are initialized to "0".

Conversely when step 50 determines that decrement time TJ has not yet reached the predetermined time, the subroutine proceeds to step 53 where decrement time TJ is incremented by "1". Thereafter, the routine proceeds to step 54 where a gradual assist current value zero control is executed, so that assist current values for first and second electric motors 24 and 26 are gradually reduced from their maximum current values, and finally reduced to zero. Thereafter, the subroutine shifts to the first stage S1.

### [3RD STAGE S3]

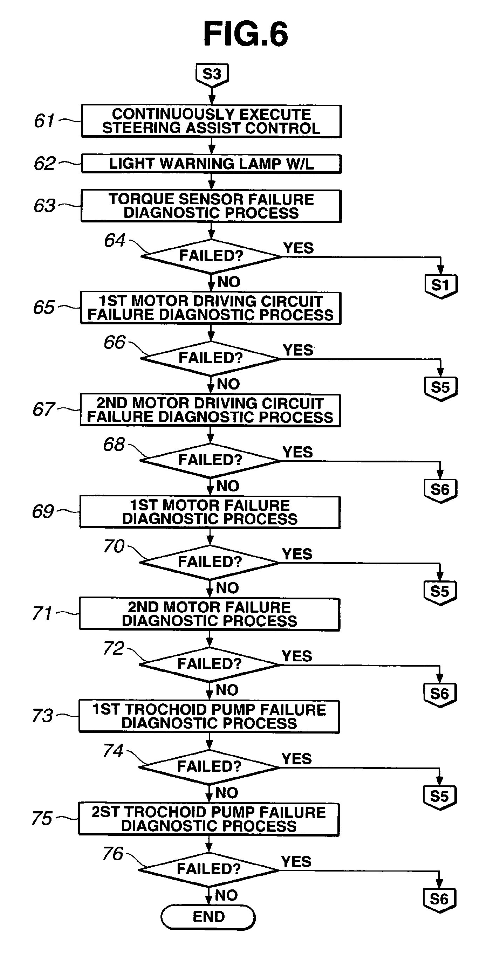

As discussed above, assuming that the previously-noted step 7 determines that torque switch 35, serving as the back-up torque detector, is failed, the routine shifts to the third stage S3. As shown in Fig. 6, at step 61 of the third stage S3, steering assist control is continuously executed by means of first hydraulic pressure supply mechanism 8. At step 62, in order to inform the driver of a fault condition of torque switch 35, the warning lamp is lighted.

Next, at step 63, a failure diagnostic process is executed for making a diagnosis on a failure in torque sensor 32. At step 64, a check is made to determine whether torque sensor 32 is failed (abnormal). When it is determined that the torque sensor is failed, the subroutine shifts to the first stage S1. Conversely when it is determined that the torque sensor is normal, a series of steps 65-76 occur. These steps 65-76 are the same diagnostic processes as the previously-discussed steps 10-21, and thus detailed description of steps 65-76 will be omitted because the above description thereon seems to be self-explanatory.

### [4TH STAGE S4]

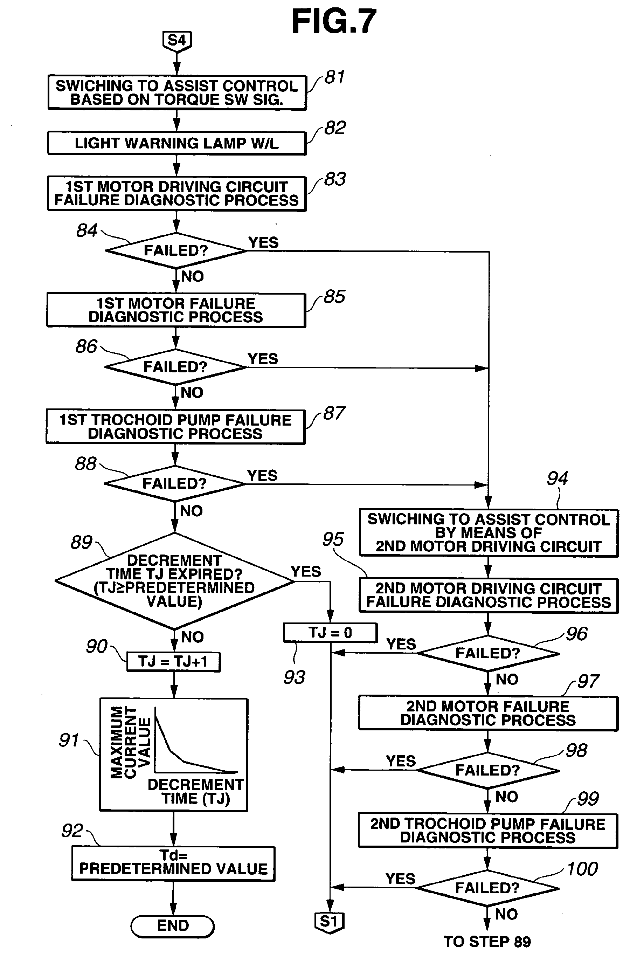

Furthermore, assuming that the previously-noted step 8 determines that torque sensor 32 is failed (abnormal), the routine shifts to the fourth stage S4. As shown in Fig. 7, at step 81 of the fourth stage, a switching process of the steering torque detector to torque switch 35 is executed. At step 82, in order to inform the driver of a fault condition of torque sensor 32, the warning lamp is lighted.

Next, at step 83, a failure diagnostic process is executed for making a diagnosis on a failure in first electric-motor driving circuit 39. At step 84, a check is made to determine whether the first electric-motor driving circuit is failed. In case of the unfailed first electric-motor driving circuit, the subroutine proceeds to step 85 where a failure diagnostic process is executed for making a diagnosis on a failure in first electric motor 24. At step 86, a check is made to determine whether the first electric motor is failed.

When step 86 determines that the first electric motor is also unfailed, the subroutine proceeds to step 87 where a failure diagnostic process is executed for making a diagnosis on a failure in first trochoid pump 23. At step 88, a check is made to determine whether first trochoid pump 23 is failed.

When step 88 determines that the first trochoid pump is also unfailed, the subroutine proceeds to step 89 where a check is made to determine whether decrement time TJ has reached the predetermined time (i.e., TJ≥predetermined time). When it is determined that decrement time TJ has not yet reached the predetermined time, the subroutine proceeds to step 90 where decrement time TJ is incremented by "1". Thereafter, at step 91, a gradual assist current value zero control is executed, so that an assist current value for first electric motor 24 is gradually reduced from its maximum current value, and finally reduced to zero (see the characteristic map of step 91).

Subsequently to the above, step 92 occurs. As can be seen from the equation of step 92, the predetermined time period Td is set to a predetermined value. In this manner, one cycle of the subroutine terminates.

On the contrary, when the previously-noted step 89 determines that decrement time TJ has reached the predetermined time, the subroutine proceeds to step 93 where decrement time TJ is reset to "0" (i.e., TJ=0). Thereafter, the subroutine shifts to the first stage S1 where valve-opening control for fail-safe valve 13 is executed to ensure manual steering.

When it is determined, based on the diagnostic results of steps 84, 86, and 88, that either one of first electric-motor driving circuit 39, first electric motor 24, and first trochoid pump 23 is failed, step 94 is executed in which a switching process to second electric-motor driving circuit 40 is initiated.

Next, at step 95, a failure diagnostic process is executed for making a diagnosis on a failure in second electric-motor driving circuit 40. At step 96, a check is made to determine whether the second electric-motor driving circuit is failed (abnormal). When it is determined that the second electric-motor driving circuit is unfailed, the subroutine proceeds to step 97 where a failure diagnostic process is executed for making a diagnosis on a failure in second electric motor 26. At step 98, a check is made to determine whether the second electric motor is failed.

When step 98 determines that the second electric motor is unfailed, the subroutine proceeds to step 99 where a failure diagnostic process is executed for making a diagnosis on a failure in second trochoid pump 25. At step 100, a check is made to determine whether the second trochoid pump is failed (abnormal). When it is determined that the second trochoid pump is unfailed, the subroutine proceeds to step 89 to repeat the previously-discussed routine.

When it is determined, based on the diagnostic results of steps 96, 98, and 100, that either one of the second electric-motor driving circuit, the second electric motor, and the second trochoid pump is failed, the subroutine shifts to the first stage S1 where valve-opening control for fail-safe valve 13 is executed to ensure manual steering.

### [MODIFICATION OF 4TH STAGE S4]

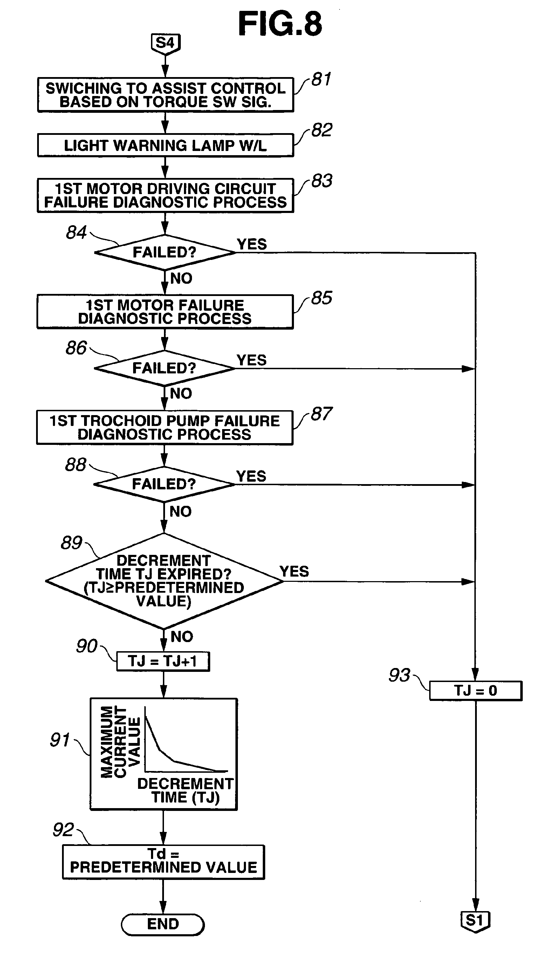

Referring to Fig. 8, there is shown the modification of the fourth stage S4. A modified point from the fourth stage is that a switching process to second electric-motor driving circuit 40 is not executed even when it is determined, based on the diagnostic results of steps 84, 86, and 88, that either one of first electric-motor driving circuit 39, first electric motor 24, and first trochoid pump 23 is failed (abnormal), and similarly to the time when it is determined, based on the result of decision of step 89, that decrement time TJ has reached the predetermined time, in presence of the failure step 93 is executed to reset decrement time TJ to "0" and thereafter the first stage S1 occurs to initiate valve-opening control for fail-safe valve 13, thereby ensuring manual steering.

### [5TH STAGE S5]

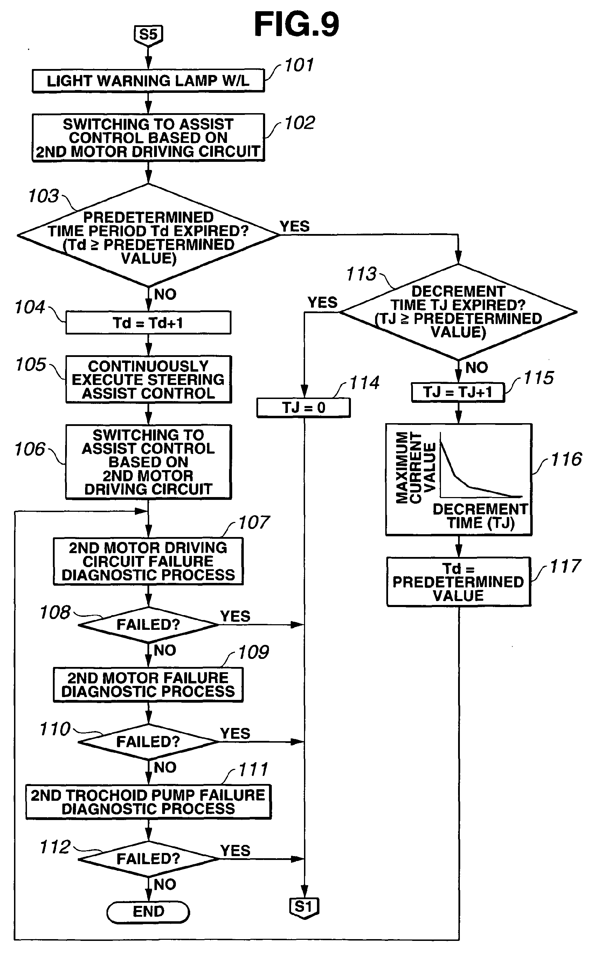

Next, assuming that the previously-noted step 11 determines that first electric motor 24 is failed (abnormal), the routine shifts to the fifth stage S5. As shown in Fig. 9, at step 101 of the fifth stage S5, in order to inform the driver of a fault condition of first electric motor 24, the warning lamp is lighted.

Thereafter, at step 102, a switching process (switching control) to second electric-motor driving circuit 40 is executed. At step 103, a check is made to determine, based on the count value of the timer, whether predetermined time period Td has reached the predetermined threshold value, for example, five seconds.

When it is determined that the predetermined threshold value has not yet been reached, the subroutine proceeds to step 104 where the predetermined time period Td is incremented by "1". Thereafter, the subroutine proceeds to step 105.

At step 105, a steering-assist-control continuation process is executed so that steering assist control is continuously executed by means of second hydraulic pressure supply mechanism 11. Thereafter, on the one hand, at step 106 a switching process (switching control) to second electric-motor driving circuit 40 is executed. On the other hand, at step 107 a failure diagnostic process is executed for making a diagnosis on a failure in second electric-motor driving circuit 40. After step 107 or subsequent steps, a failure diagnosis is executed in accordance with the same routine as steps 12-21.

That is, at step 108, a check is made to determine whether second electric-motor driving circuit 40 is failed. When the second electric-motor driving circuit is unfailed, the subroutine proceeds to step 109 where a failure diagnostic process is executed for making a diagnosis on a failure in second electric motor 26. At step 110, a check is made to determine whether second electric motor 26 is failed. When the second electric motor is unfailed, the subroutine proceeds to step 111 where a failure diagnostic process is executed for making a diagnosis on a failure in second trochoid pump 25. At step 112, a check is made to determine whether the second trochoid pump is failed. When the second trochoid pump is unfailed, the subroutine terminates.

Assuming that each of failure diagnostic steps 108, 110, and 112 determines that a failure occurs, the subroutine returns to the first stage S1 where valve-opening control for fail-safe valve 13 is executed to ensure manual steering.

On the contrary, when step 103 determines that predetermined time period Td becomes greater than or equal to the predetermined threshold value, the subroutine proceeds to step 113. At step 113, a check is made to determine, based on the count value of the timer, if decrement time TJ has reached the predetermined time. When the predetermined time has been reached, the subroutine proceeds to step 114 where decrement time TJ is reset to "0" (i.e., TJ=0), and thereafter the subroutine shifts to the first stage S1 where valve-opening control for fail-safe valve 13 is executed to ensure manual steering.

Conversely when step 113 determines that the predetermined time for decrement time TJ has not yet been reached, the subroutine proceeds to step 115 where decrement time TJ is incremented by "1". As can be seen from the characteristic map of step 116, a gradual assist current value zero control is executed, so that an assist current value for second electric motor 26 is gradually reduced from its maximum current value, and finally reduced to zero. Thereafter, the subroutine proceeds to step 117 where the predetermined time period Td is set to a predetermined value. Thereafter, the subroutine flows from step 117 to step 107.

### [MODIFICATION OF 5TH STAGE S5]

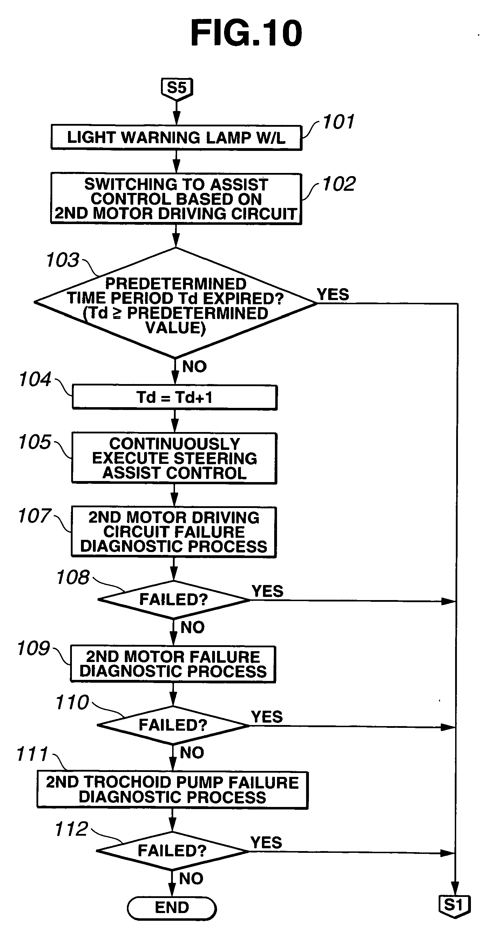

Referring to Fig. 10, there is shown the modification of the fifth stage S5. A modified point from the flow chart of the fifth stage shown in Fig. 9 is that a switching process (switching control) to second electric-motor driving circuit 40 is executed only through step 102, without step 106, that is, step 106 of the subroutine shown in Fig. 9 is eliminated in the modification.

A further modified point from the flow chart of the fifth stage is that, when step 103 determines that predetermined time period Td becomes greater than or equal to the predetermined threshold value, the subroutine jumps from step 103 to the first stage S1 without executing decrement time TJ control, such that valve-opening control for fail-safe valve 13 is quickly executed to ensure manual steering.

### [6TH STAGE S6]

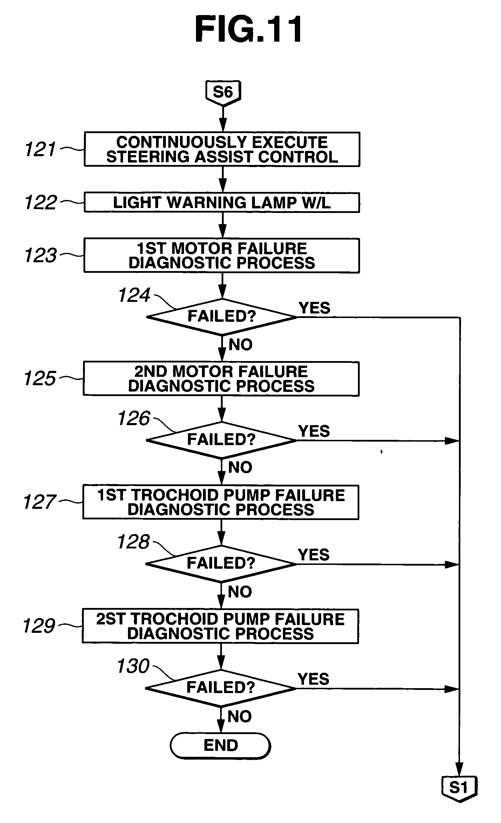

As set forth above, the sixth stage S6 is executed when it is determined that each of equipments included in second hydraulic pressure supply mechanism 11 is failed (abnormal). As shown in Fig. 11, at step 121 of the sixth stage, a steering-assist-control continuation process is temporarily executed so that steering assist control is continuously executed. At step 122, in order to inform the driver of a fault condition of second hydraulic pressure supply mechanism 11, the warning lamp is lighted.

Subsequently to the above, at step 123, a failure diagnostic process is executed for making a diagnosis on a failure in first electric motor 24. At step 124, a check is made to determine whether motor 24 is failed. When the first electric motor is unfailed, the subroutine proceeds to step 125.

At step 125, a failure diagnostic process is executed for making a diagnosis on a failure in second electric motor 26. At step 126, a check is made to determine whether motor 26 is failed. When it is determined that the second electric motor is unfailed (normal), the subroutine proceeds to step 127 where a failure diagnostic process is executed for making a diagnosis on a failure in first trochoid pump 23. Thereafter, at step 128, a check is made to determine whether first trochoid pump 23 is failed.

When it is determined that the first trochoid pump is unfailed, the subroutine proceeds to step 129 where a failure diagnostic process is executed for making a diagnosis on a failure in second trochoid pump 25. At step 130, a check is made to determine whether the second trochoid pump is failed. When the second trochoid pump is unfailed, the subroutine terminates.

Assuming that each of failure diagnostic steps 124, 126, 128 and 130 determines that a failure in each of first and second electric motors 24 and 26 and first and second trochoid pumps 23 and 25 occurs, the subroutine returns to the first stage S1 where valve-opening control for fail-safe valve 13 is executed to ensure manual steering.

### [METHOD OF FAILURE DETECTION]

Hereunder described is a detailed method of failure detection performed by the failure detector, for detecting a failure in each of equipments containing at least torque sensor 32.

As a method of detection concerning a torque-sensor system failure, for example a failure in torque sensor 32, dual torque signals, namely an unamplified steering torque sensor signal, whose signal value is identical to the steering torque signal value, and an amplified steering torque signal multiplied or amplified by amplifier 38 by a predetermined multiplying factor, are taken in main computer 36. After analogue-to-digital (AD) conversation for each of these torque signals, the multiplying factors of the two signals are finally compensated and adjusted to become identical to each other. Thereafter, by way of comparison between the adjusted two signals, it is possible to detect both of a failure in the AD converter of main computer 36 and a failure in the amplified function (amplification factor of amplifier 38.

As post-processing executed after a torque sensor system failure has been detected, in lieu of the torque sensor signal, the torque switch signal transmitted through torque-switch line SW is utilized to temporarily execute back-up control, while operating first electric-motor driving circuit 39 or second electric-motor driving circuit 40, and simultaneously lighting the warning lamp.

As described previously, dual torque signals, namely the main torque signal and the sub torque signal, both generated by torque sensor 32, are taken in sub computer 37 as redundant output. When it is determined, based on a comparison result of these torque signals, that there is a difference between the two torque signals, a torque sensor system failure is occurring. At this time, information about such a fault condition is transmitted from sub computer 37 to main computer 36 through main-to-sub intercommunication. Therefore, in lieu of the torque sensor signal, the torque switch signal transmitted through torque-switch line SW is utilized to temporarily execute back-up control, while operating first electric-motor driving circuit 39 or second electric-motor driving circuit 40, and simultaneously lighting the warning lamp.

In a similar manner, regarding the torque switch signal transmitted through torque-switch line SW, a failure in the torque switch is continuously monitored or observed by way of comparison between the main torque signal and the sub torque signal. Main computer 36 and sub computer 37 are linked to each other by way of P-RUN connection, and the operating function of the main computer is monitored by sub computer 37 by way of example arithmetic processing.

Failures in first and second electric-motor driving circuits 39 and 40, first and second electric motors 24 and 26, and first and second trochoid pumps 23 and 25 are monitored by means of main computer 36 and sub computer 37.

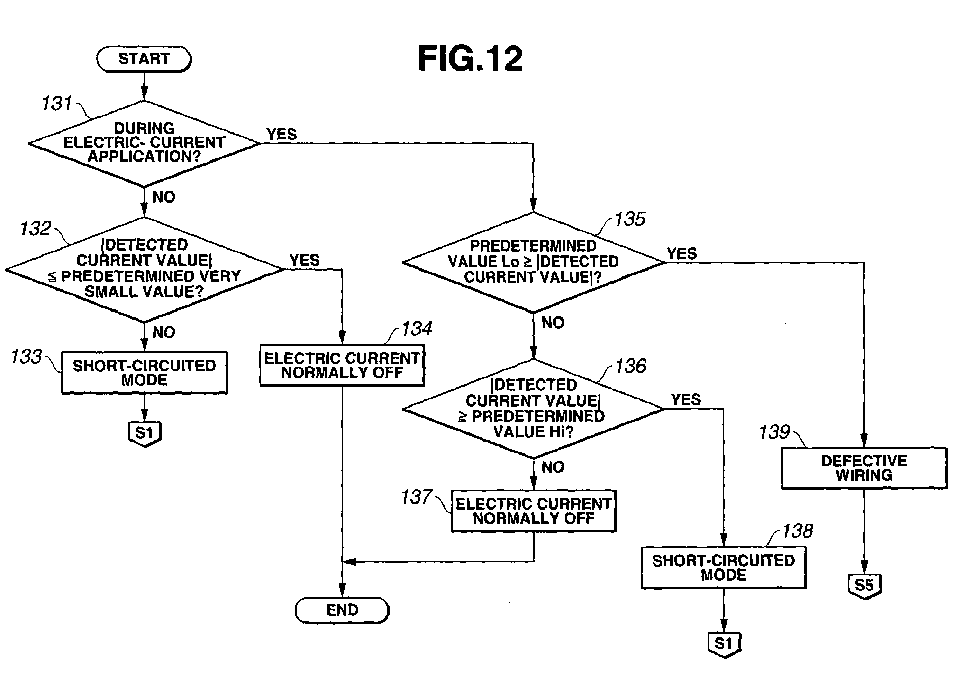

As a method of detection concerning a motor system failure by way of electric-current detection of each of first and second electric motors 24 and 26, as shown in Fig. 12, through step 131, a check is made to determine if an electric current is applied to each of the motors at the current execution cycle. When it is determined that there is no electric-current application, the subroutine proceeds to step 132. At step 132, a check is made to determine whether the absolute value of the detected current value is less than or equal to a predetermined very small current value (a predetermined threshold value). When the answer to step 132 is negative (NO), that is, the absolute value of the detected current value is greater than the predetermined current threshold value, the subroutine proceeds to step 133 where it is determined that the electric circuit is shorted and conditioned in the short-circuited mode (a defect in the electric circuit), and thereafter the subroutine shifts to the first stage S1.

Conversely when the answer to step 132 is affirmative (YES), that is, the absolute value of the detected current value is less than or equal to the predetermined current threshold value, the subroutine proceeds to step 134 where it is determined that the electric current is normally controlled to zero (OFF), and then the subroutine terminates.

On the contrary, when step 131 determines that he pump is energized, the subroutine proceeds to step 135 where a check is made to determine whether the absolute value of the detected current value is less than or equal to a predetermined low current value Lo.

When the answer to step 135 is negative (NO), that is, it is determined that the absolute value of the detected current value is greater than the predetermined low current value, the subroutine proceeds to step 136 where a check is made to determine whether the absolute value of the detected current value is greater than or equal to a predetermined high current value Hi. When the answer to step 136 is negative (NO), that is, it is determined that the absolute value of the detected current value is less than the predetermined high current value, the subroutine proceeds to step 137 where it is determined that the electric current is normally controlled to increase (ON), and then the subroutine terminates. Conversely when the answer to step 136 is affirmative (YES), that is, it is determined that the absolute value of the detected current value is greater than the predetermined high current value, the subroutine proceeds to step 138 where it is determined that the electric circuit is shorted and conditioned in the short-circuited mode (a defect in the electric circuit), and thereafter the subroutine shifts to the first stage S1.

On the contrary, when step 135 determines that the absolute value of the detected current value is less than predetermined low current value Lo, the subroutine proceeds to step 139 where it is determined that the open-circuit condition occurs owing to defective wiring, and thereafter the subroutine shifts to the fifth stage S5.

Hereinafter described is a method of pump-failure detection of each of first and second trochoid pumps 23 and 25, based on sensor signals from the electric-current sensor and torque sensor 32.

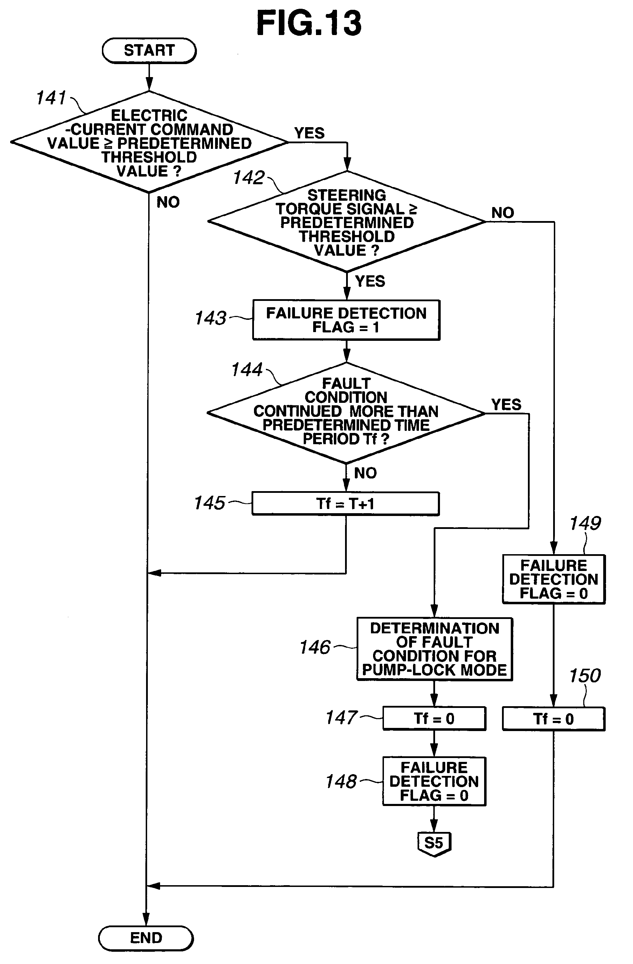

As shown in Fig. 13, at step 141, a check is made to determine whether an electric-current command value is greater than or equal to a predetermined threshold value. When the electric-current command value is less than the predetermined threshold value, it is determined that each of first and second trochoid pumps 23 and 25 is not jammed (that is, out of a so-called pump-lock condition), and operating normally, and thus the subroutine terminates. Conversely when the electric-current command value is greater than or equal to the predetermined threshold value, the subroutine proceeds to step 142.

At step 142, a check is made to determine whether the steering torque signal is greater than or equal to a predetermined threshold value. When the steering torque signal is greater than or equal to the predetermined threshold value, it is determined that a failure occurs. Thus, the subroutine proceeds to step 143 where a failure detection flag is set to "1", and then advances to step S144 where a check is made to determine, based on a count value of a timer, whether such a fault condition continues more than a predetermined time period Tf. When the fault condition does not continue more than predetermined time period Tf, step 145 is executed in which predetermined time period Tf is updated by a sum obtained by adding "1" to the current count value T of the timer, and then one cycle of the subroutine terminates.

On the contrary, when the fault condition continues more than predetermined time period Tf, it is determined that there is a possibility of the pump-lock condition. Thus, step 146 is executed in which determination processing is carried out as a fault condition corresponding to the pump-lock mode.

Subsequently to the above, step 147 is executed in which predetermined time period Tf is reset to "0". Thereafter, at step 148, the failure detection flag is reset to "0", and then the subroutine shifts to the fifth stage S5.

On the contrary, when step 142 determines that the steering torque signal is less than the predetermined threshold value, step 149 is executed in which the failure detection flag is reset to "0", and at the next step 150 predetermined time period Tf is reset or initialized to "0". In this manner, one execution cycle of the subroutine terminates.

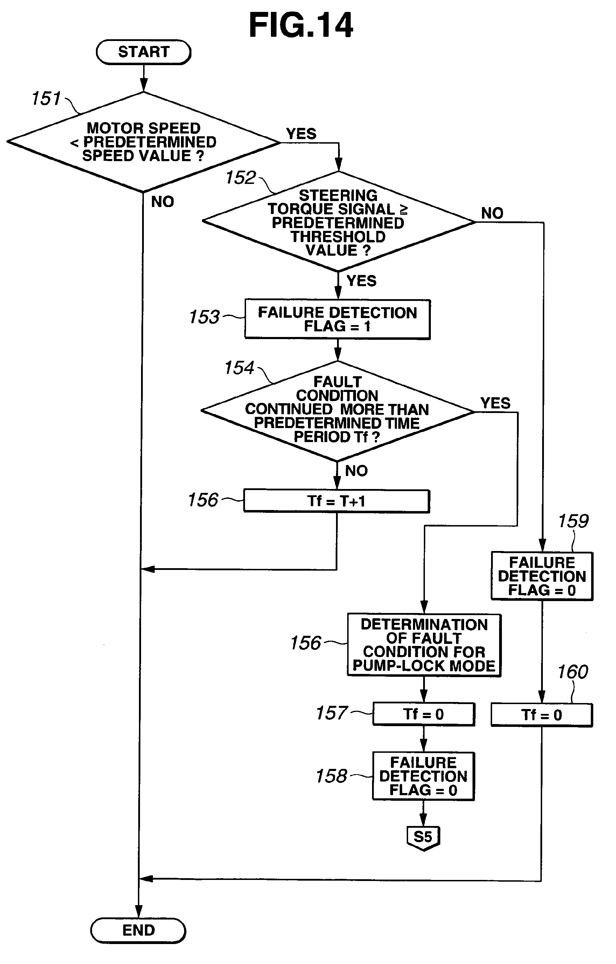

As a method of pump failure detection for the pumps, based on respective motor speeds of first and second electric motors 24 and 26, as shown in Fig. 14, the subroutine begins at step 151 where a check is made to determine whether a motor speed value of each of the motors is less than a predetermined motor speed value. When the answer to step 151 is negative (NO), that is, the motor speed is greater than or equal to the predetermined speed value, it is determined that each of the motors is operating normally, and thus the subroutine terminates. Conversely when it is determined that the motor speed value is less than the predetermined speed value, step 152 is entered in which a check is made to determine whether the steering torque signal from torque sensor 32 is greater than or equal to a predetermined threshold value.

When it is determined that the steering torque signal is greater than or equal to the predetermined threshold value, step 153 is entered in which a failure detection flag is set to "1", and then step 154 is entered in which a check is made to determine, based on a count value of a timer, whether such a fault condition continues more than a predetermined time period Tf. When the fault condition does not continue more than predetermined time period Tf, step 155 is executed in which predetermined time period Tf is updated by a sum obtained by adding "1" to the current count value T of the timer, and then one execution cycle of the subroutine terminates. On the contrary, when the fault condition continues more than predetermined time period Tf, it is determined that a fault condition certainly occurs. Thus, step 156 is entered in which determination processing is carried out as a fault condition corresponding to the pump-lock mode. Then, step 157 is executed in which predetermined time period Tf is reset to "0".

Subsequently to the above, at step 158, the failure detection flag is reset to "0", and then the subroutine shifts to the fifth stage S5.

On the contrary, when step 152 determines that the steering torque signal is not greater than the predetermined threshold value, step 159 is entered in which the failure detection flag is reset to "0", because of no pump failure. Then at step 160, predetermined time period Tf is reset or initialized to "0". In this manner, one execution cycle of the subroutine terminates.

As discussed above, according to the first embodiment, when first hydraulic pressure supply mechanism 8 is failed and malfunctions, a steering assist force can be positively applied by way of switching to second hydraulic pressure supply mechanism 11. Thus, it is possible to reduce the magnitude of necessary operating physical force to be applied to steering wheel 1 by the driver.

Additionally, in a similar manner to the construction of first hydraulic pressure supply mechanism 8, as a medium of pressure transmission, second hydraulic pressure supply mechanism 11 also uses working fluid supplied into first and second fluid passages 6 and 7 and hydraulic power cylinder 5, rather than electric power source. Thus, even in case of the use of a hydraulic pressure source (e.g., an oil pump) having a comparatively small discharge capacity, it is possible to provide an adequate steering assist force.

Furthermore, in the first embodiment, it is possible to detect a failure in first hydraulic pressure supply mechanism 8 by virtue of the failure detector of control unit 14. This enables smooth switching control to second hydraulic pressure supply mechanism 11.

The pump capacity of second hydraulic pressure supply mechanism 11, that is, design capacities of second electric motor 26 and second trochoid pump 25, is set to be less than that of first hydraulic pressure supply mechanism 8, that is, design capacities of first electric motor 24 and first trochoid pump 23. Thus, the system can be downsized, thus ensuring reduced and suppressed production costs.

Moreover, first and second hydraulic pressure supply mechanisms 8 and 11 are laid out in parallel with each other with respect to hydraulic power cylinder 5. This contributes to the reduced design capacity of each of first and second trochoid pumps 23 and 25 and first and second electric motors 24 and 26, thus reducing inertia of each of first and second electric motors 24 and 26.

Additionally, first and third fluid passages 6 and 9 are joined each other upstream of hydraulic power cylinder 5, and also second and fourth fluid passages 7 and 10 are joined each other upstream of the hydraulic power cylinder. In addition, the line lengths and line diameters of the first and third fluid passages are set, so that a pulsation of hydraulic pressure produced by first trochoid pump 23 and a pulsation of hydraulic pressure produced by second trochoid pump 25 cancel out each other. Likewise, the line lengths and line diameters of the second and fourth fluid passages are set, so that a pulsation of hydraulic pressure produced by the first trochoid pump and a pulsation of hydraulic pressure produced by the second trochoid pump cancel out each other. Therefore, it is possible to reduce undesirable pulsation of hydraulic pressure supplied to each of the first and second hydraulic pressure chambers of hydraulic power cylinder 5.

### [SECOND EMBODIMENT]

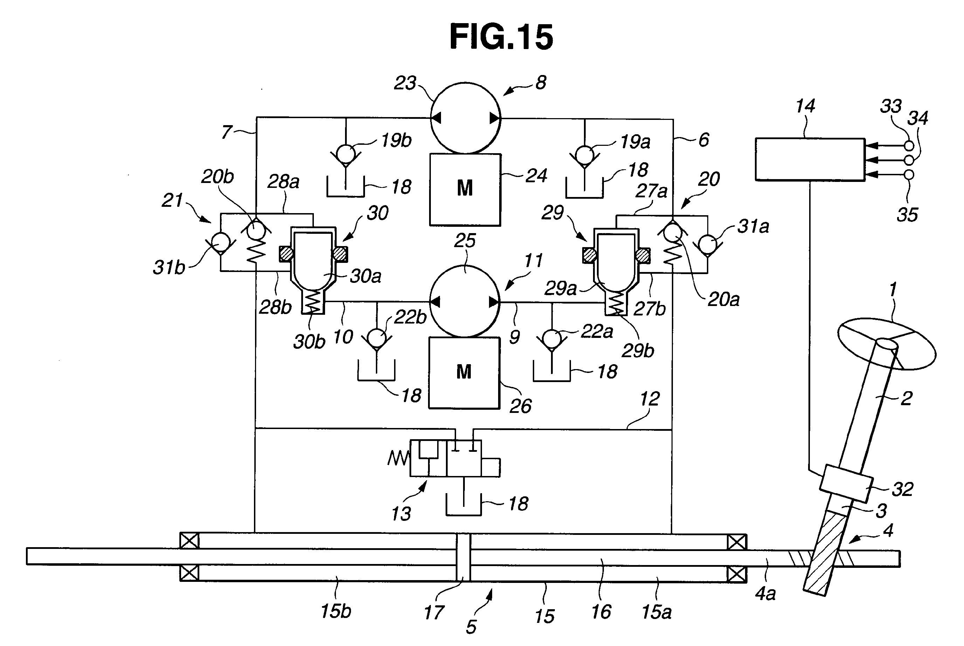

Referring now to Fig. 15, there is shown the system of the second embodiment. The second embodiment is different from the first embodiment in that, in the second embodiment, the capacities of second electric motor 26 and second trochoid pump 25 of second hydraulic pressure supply mechanism 11 are set to the same capacities as those of first hydraulic pressure supply mechanism 8.

Second hydraulic pressure supply mechanism 11 of the second embodiment is constructed in a manner so as to operate together with first hydraulic pressure supply mechanism 8 during operation as well as during a failure in the first hydraulic pressure supply mechanism. The sum of maximum discharge capacities of first and second hydraulic pressure supply mechanisms 8 and 11 of the second embodiment is set to be substantially identical to the maximum discharge capacity of first hydraulic pressure supply mechanism 8 of the first embodiment. The discharge capacity of each of the first and second hydraulic pressure supply mechanisms of the second embodiment is designed to be greater than that of second hydraulic pressure supply mechanism 11 of the first embodiment. Thus, in the system of the second embodiment it is possible to provide an adequate steering assist force as a back-up hydraulic pressure supply mechanism during the failure in first hydraulic pressure supply mechanism 8.

The control method performed during a system failure, such as at least one of the steering-system equipments, previously described with respect to the first embodiment, can be applied to the second embodiment. However, in the system of the second embodiment, the fifth stage S5 is slightly modified.

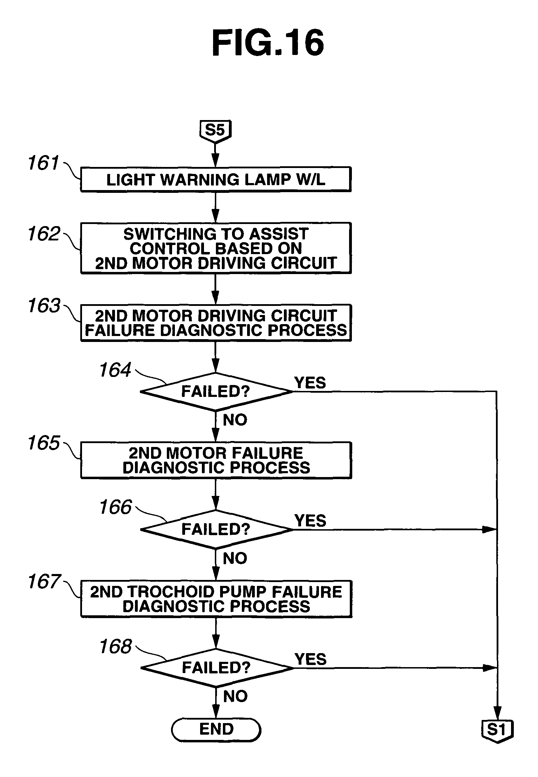

That is, as a control procedure initiated when shifting to the fifth stage occurs owing to a failure in first electric-motor driving circuit 39 of first hydraulic pressure supply mechanism 8, at step 161 shown in Fig. 16, in order to inform the driver of a fault condition of first electric-motor driving circuit 39, the warning lamp is lighted.

Subsequently to the above, at step 162, a switching process (switching control) to second electric-motor driving circuit 40 is executed. Furthermore, at step 163, a failure diagnostic process is executed for making a diagnosis on a failure in second electric-motor driving circuit 40. At step 164, a check is made to determine whether second electric-motor driving circuit 40 is failed.

When the second electric-motor driving circuit is unfailed, the subroutine proceeds to step 165 where a failure diagnostic process is executed for making a diagnosis on a failure in second electric motor 26. At step 166, a check is made to determine whether second electric motor 26 is failed.

When the second electric motor is unfailed, the subroutine proceeds to step 167 where a failure diagnostic process is executed for making a diagnosis on a failure in second trochoid pump 25. At step 168, a check is made to determine whether the second trochoid pump is failed. When the second trochoid pump is unfailed, the subroutine terminates.

Assuming that it is determined, through each of failure diagnostic steps 164, 166, and 168, that a failure in either one of second electric-motor driving circuit 40, second electric motor 26, and second trochoid pump 25 occurs, the subroutine returns to the first stage S1 to ensure manual steering.

### [THIRD EMBODIMENT]

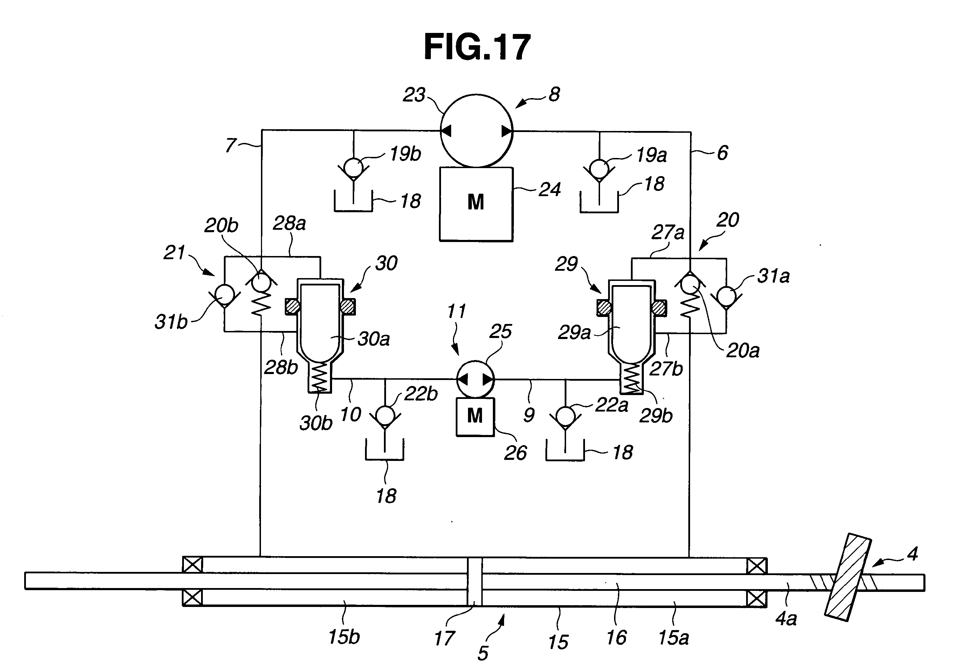

Referring now to Fig. 17, there is shown the system of the third embodiment, wherein communication passage 12 and fail-safe valve 13 are eliminated.

Therefore, when first and second hydraulic pressure supply mechanisms 8 and 11 are both failed, it is impossible to provide a fail-safe valve function. This leads to the problem of a great driver's operating load on steering wheel 1, but realizes greatly-reduced production costs.

The method of failure detection performed during a system failure, such as a failure in at least one of equipments constructing the power steering system of the third embodiment, is identical to that of the first embodiment. In the system of the third embodiment the fail-safe valve is eliminated and therefore the failure-detection method (the other failure-detecting stages) except the first stage S1 is applied to the third embodiment.

### [FOURTH EMBODIMENT]

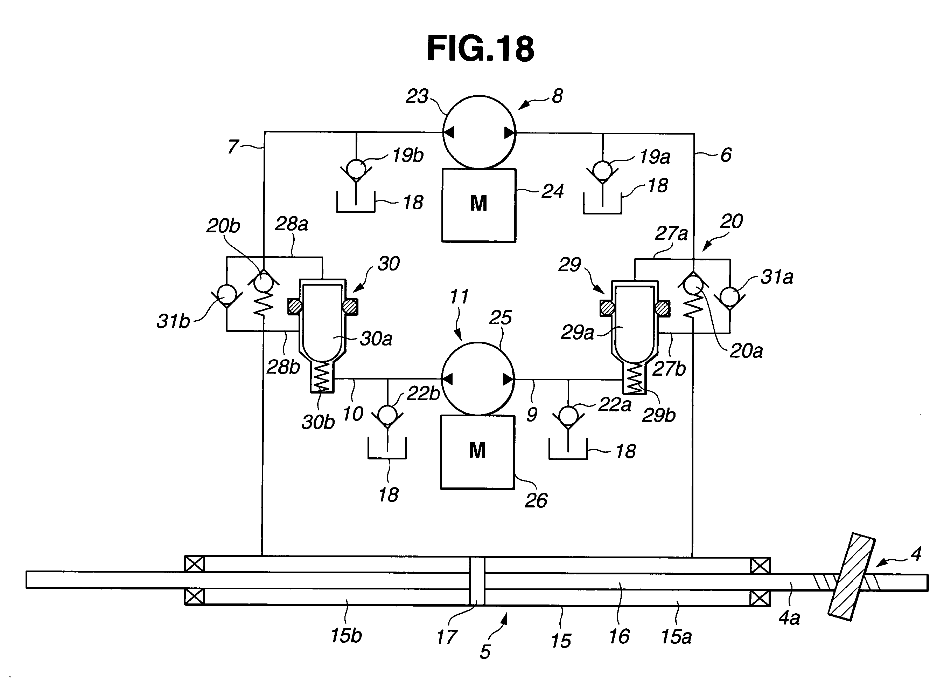

Referring now to Fig. 18, there is shown the system of the fourth embodiment, wherein communication passage 12 and fail-safe valve 13 are eliminated in a similar manner to the third embodiment. Thus, in the system of the fourth embodiment it is possible to realize reduced production costs. In a similar manner to the second embodiment, the fourth embodiment uses first and second hydraulic pressure supply mechanisms 8 and 11 whose capacities are set to be substantially identical to each other. Therefore, it is possible to provide a superior back-up ability even when a failure in either one of the two hydraulic pressure supply mechanisms occurs.

In a similar manner to the second embodiment, in the system of the fourth embodiment the fail-safe valve is eliminated and therefore the failure-detection method (the other failure-detecting stages) except the first stage S1 is applied to the fourth embodiment.

### [FIFTH EMBODIMENT]

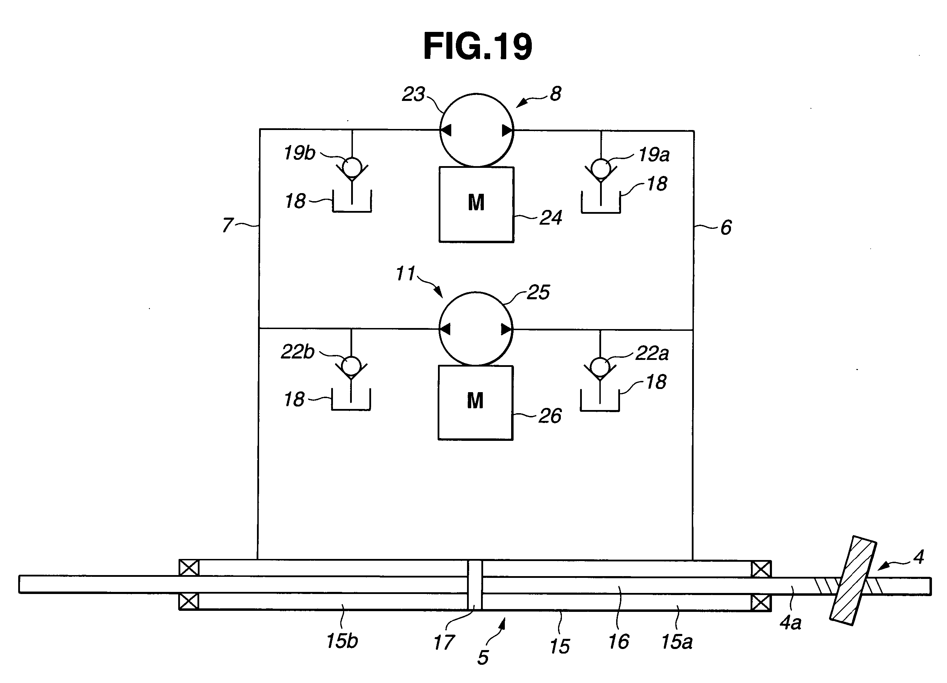

Referring now to Fig. 19, there is shown the system of the fifth embodiment, which is similar to the fourth embodiment in that the fifth embodiment uses the structurally similar first and second hydraulic pressure supply mechanisms 8 and 11 whose capacities are set to be substantially identical to each other. The fifth embodiment is somewhat different from the fourth embodiment in that the previously-noted first and second fluid-passage directional control valves are both eliminated, and therefore the first end of third fluid passage 9 is connected directly to first fluid passage 6, whereas the first end of fourth fluid passage 10 is connected directly to second fluid passage 7.

Therefore, assuming that first hydraulic pressure supply mechanism 8 is failed and then conditioned in its stopped state (shutdown state), second hydraulic pressure supply mechanism 11 is continuously kept operative. This permits hydraulic pressure to be selectively supplied to either one of hydraulic pressure chambers 15a and 15b, thus ensuring steering assist force application. However, part of hydraulic pressure of working fluid discharged from second trochoid pump 25 tends to be introduced into the hydraulic circuit of second hydraulic pressure supply mechanism 11 via first and second fluid passages 6 and 7.

For the reasons discussed above, on the one hand, the magnitude of steering assist force created by second hydraulic pressure supply mechanism 11 tends to be somewhat lowered, but, on the other hand, owing to a fluid flow resistance of working fluid in the hydraulic circuit of first hydraulic pressure supply mechanism 8, the steering assist force created by the second hydraulic pressure supply mechanism can satisfactorily function as a temporary assistance force. In a similar manner, in case of a failure in second hydraulic pressure supply mechanism 11, the steering assist force created by the first hydraulic pressure supply mechanism can satisfactorily function as a temporary assistance force.

The system of the fifth embodiment can be simplified in total construction, and thus it is possible to greatly reduce manufacturing costs and assembling costs.

In the system of the fifth embodiment, first and second hydraulic pressure supply mechanisms 8 and 11 are both operating continuously, even when either one of the two hydraulic pressure supply mechanisms is failed, the other hydraulic pressure supply mechanism (the unfailed pressure supply mechanism) can automatically provide a steering assist function.

### [SIXTH EMBODIMENT]

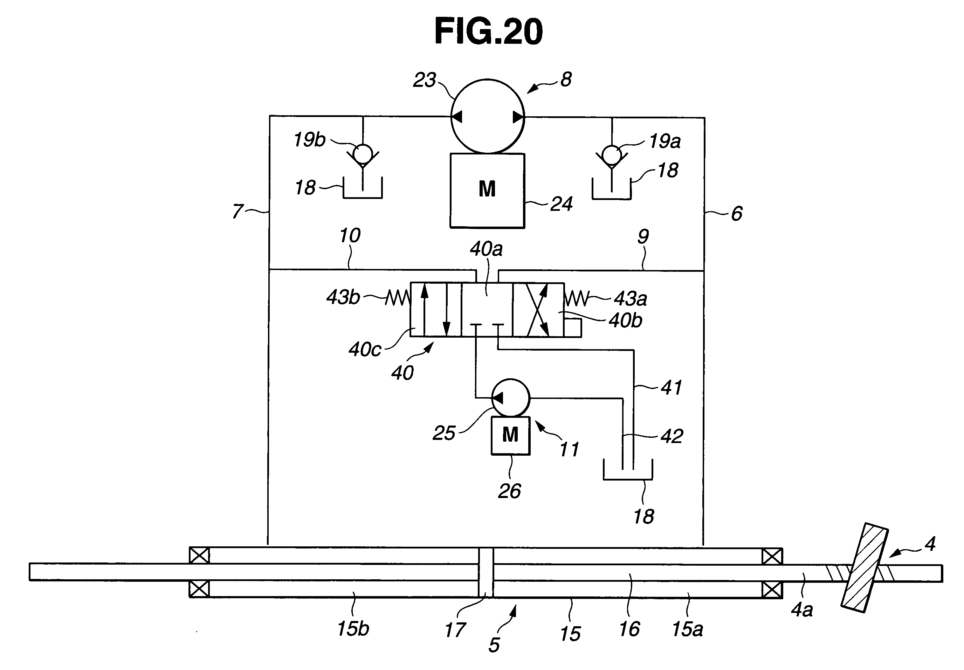

Referring now to Fig. 20, there is shown the system of the sixth embodiment. In the sixth embodiment, the construction of first hydraulic pressure supply mechanism 8 is identical to that of the fifth embodiment, but the construction of second hydraulic pressure supply mechanism 11 is different from that of the fifth embodiment.

More concretely, a four-port two-position electromagnetic fluid-passage directional control valve 40 is provided between third and fourth fluid passages 9 and 10. Additionally, second hydraulic pressure supply mechanism 11, which has a smaller pump capacity than first hydraulic pressure supply mechanism 8, is provided downstream of electromagnetic directional control valve 40. Second hydraulic pressure supply mechanism 11 of the sixth embodiment is not constructed as a reversible type (a bidirectional type). The second hydraulic pressure supply mechanism is constructed by a downsized unidirectional, second trochoid pump 25 and a downsized second electric motor 26.

Electromagnetic directional control valve 40 is constructed to be operated in either one of three phases, namely a normal phase 40a wherein fluid communication between third and fourth fluid passages 9 and 10 is blocked, a first directional-control phase (a first operating position) wherein fluid communication between the discharge side of second trochoid pump 25 and third fluid passage 9 is established and simultaneously fluid communication between a drain passage 41 connected to reservoir tank 18 and fourth fluid passage 10 is established, and a second directional-control phase (a second operating position) wherein fluid communication between the discharge side of second trochoid pump 25 and fourth fluid passage 10 is established and simultaneously fluid communication between drain passage 41 and third fluid passage 9 is established. Selectively switching from one of the three phases to the other is performed by way of a command signal, i.e., an electric current generated from control unit 14, and spring forces of spring members 43a and 43b built in the valve housing.
Furthermore, second trochoid pump 25 is disposed in an inlet passage 42 connected to reservoir tank 18.

Moreover, the first end of third fluid passage 9 is connected directly to first fluid passage 6, whereas the first end of fourth fluid passage 10 is connected directly to second fluid passage 7.

In the system of the sixth embodiment, second hydraulic pressure supply mechanism 11 is conditioned normally in its inoperative state. Only when a failure in first hydraulic pressure supply mechanism 8 occurs, the second hydraulic pressure supply mechanism comes into operation in response to a control signal from control unit 14.

Therefore, according to the sixth embodiment, when first hydraulic pressure supply mechanism 8 has been failed and stopped owing some factors, the operating position of electromagnetic directional control valve 40 is properly switched responsively to a control current generated from control unit 14 owing to a turning action of steering wheel 1, such that hydraulic pressure of working fluid discharged from second trochoid pump 25 is supplied to either one of third and fourth fluid passages 9-10. As a result of this, high-pressure working fluid is supplied selectively to either one of hydraulic pressure chambers 15a and 15b, thus ensuring steering assist force application.

In particular, switching among fluid passages is performed by means of electromagnetic directional control valve 40. This enhances the control accuracy of hydraulic pressure supply through second hydraulic pressure supply mechanism 11.

### [SEVENTH EMBODIMENT]

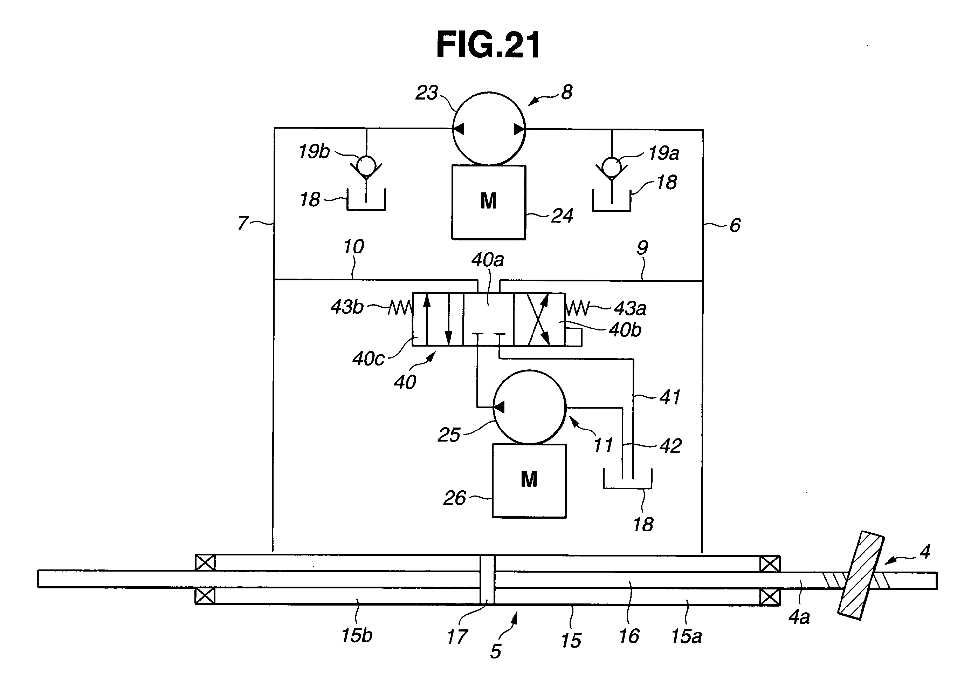

Referring now to Fig. 21, there is shown the system of the seventh embodiment whose basic construction is similar to the sixth embodiment. The seventh embodiment is somewhat different from the sixth embodiment in that, in the seventh embodiment, the capacities of second trochoid pump 25 and second electric motor 26 of second hydraulic pressure supply mechanism 11 are set to the same large capacities as those of first hydraulic pressure supply mechanism 8.

Thus, the seventh embodiment can provide the same operation and effects as the sixth embodiment. Additionally, by virtue of the increased pump capacity of the second pump, the system of the seventh embodiment can produce a greater steering assist force.

### [EIGHTH EMBODIMENT]

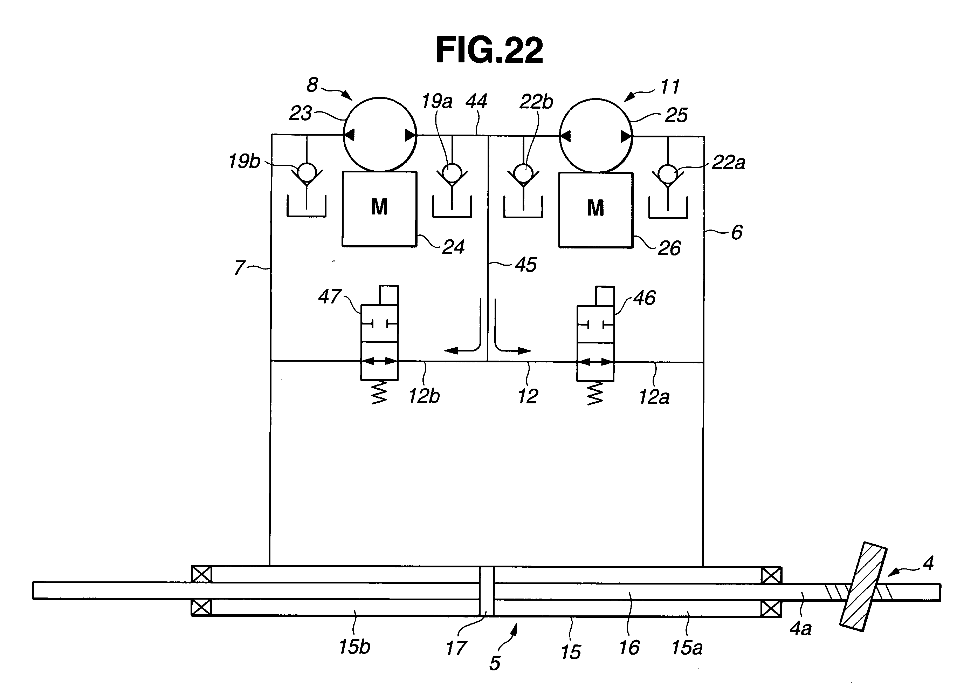

Referring now to Fig. 22, there is shown the system of the eighth embodiment, wherein first and second hydraulic pressure supply mechanisms 8 and 11 are arranged in series to each other.

More concretely, first and second hydraulic pressure supply mechanisms 8 and 11 are arranged in series to each other and provided on both sides of an intermediate junction passage 44 intercommunicating first and second fluid passages 6 and 7. Also provided is a branch passage 45 intercommunicating the intermediate passage 44 and communication passage 12 through which first and second fluid passages 6 and 7 are communicated each other.

First and second hydraulic pressure supply mechanisms 8 and 11 of the eighth embodiment are structurally identical to those of the second embodiment. The first hydraulic pressure supply mechanism includes the reversible-type first trochoid pump 23 and first electric motor 24 driving the first pump in the normal-rotational direction or in the reverse-rotational direction. Likewise, the second hydraulic pressure supply mechanism includes the reversible-type second trochoid pump 25 and second electric motor 26 driving the second pump in the normal-rotational direction or in the reverse-rotational direction. Inlet valves 19a and 19b, both communicating reservoir tank 18, are connected to respective ends (right and left ports) of pump 23, whereas inlet valves 22a and 22b, both communicating reservoir tank 18, are connected to respective ends (right and left ports) of pump 25.

Each of electric motors 24 and 26 is controlled by control unit 14. During a normal condition, only the first electric motor 24 included in first hydraulic pressure supply mechanism 8 is operated. During an abnormal condition where first hydraulic pressure supply mechanism 8 is failed and thus stopped, the system is designed so that second hydraulic pressure supply mechanism 11 comes into operation.

Communication passage 12 is comprised of a left-hand side communication-passage portion (a first communication-passage portion 12a) and a right-hand side communication-passage portion (a second communication-passage portion 12b) between which one end (a downstream end) of branch passage 45 is sandwiched. First and second directional control valves 46 and 47 are provided in the respective communication-passage portions 12a and 12b, for routing or switching hydraulic pressure (pressurized working fluid flow) introduced through branch passage 45 into communication passage 12 via the first or second communication-passage portions selectively into either one of first and second fluid passages 6 and 7.

Each of first and second directional control valves 46 and 47 is constructed by a two-port two-position solenoid valve. Each of the directional control valves can be selectively opened or closed in response to a control current from control unit 14.
Therefore, during a normal condition second electric motor 26 is conditioned in its stopped state, and simultaneously second directional control valve 47 is conditioned in its valve closed state. Under these conditions, when first hydraulic pressure supply mechanism 8 is operated owing to a turning action of steering wheel 1, high-pressure working fluid discharged from one of the two ports of first trochoid pump 23 is introduced via second fluid passage 7 directly into second hydraulic chamber 15b. On the other hand, high-pressure working fluid discharged from the other port of the first trochoid pump flows through intermediate passage 44 into branch passage 45, and then flows into communication passage 12. Thereafter, the high-pressure working fluid further flows through first communication-passage portion 12a and first directional control valve 46 held in the valve open state via first fluid passage 6 into first hydraulic chamber 15a, thereby ensuring steering assist force application.

On the contrary, assuming that first hydraulic pressure supply mechanism 8 is failed and then conditioned in its stopped state, control unit 14 operates to shift second directional control valve 47 to a valve open state, and simultaneously to shift first directional control valve 46 to a valve closed state. Under these conditions, when second hydraulic pressure supply mechanism 11 is operated owing to a turning action of steering wheel 1, high-pressure working fluid discharged from one of the two ports of the second pump is supplied directly into first hydraulic chamber 15a. On the other hand, high-pressure working fluid discharged from the other port of the second pump is supplied through intermediate passage 44, branch passage 45, second communication-passage portion 12b, and second directional control valve 47 into second hydraulic chamber 15b, thereby ensuring steering assist force application.

As a modified system, during a normal condition, both of first and second hydraulic pressure supply mechanisms 8 and 11 may be operated simultaneously in such a manner that their pump rotational directions are switched to the same direction. In this case, first and second directional control valves 46 and 47 are controlled to their valve closed states.

With the modified system, assuming that either one of first and second hydraulic pressure supply mechanisms 8 and 11 is failed and then conditioned in the stopped state, as previously described, it is possible to operate or effectively utilize the unfailed one of first and second hydraulic pressure supply mechanisms 8 and 11 by selectively opening or closing either one of directional control valves 46 and 47.

### [NINTH EMBODIMENT]

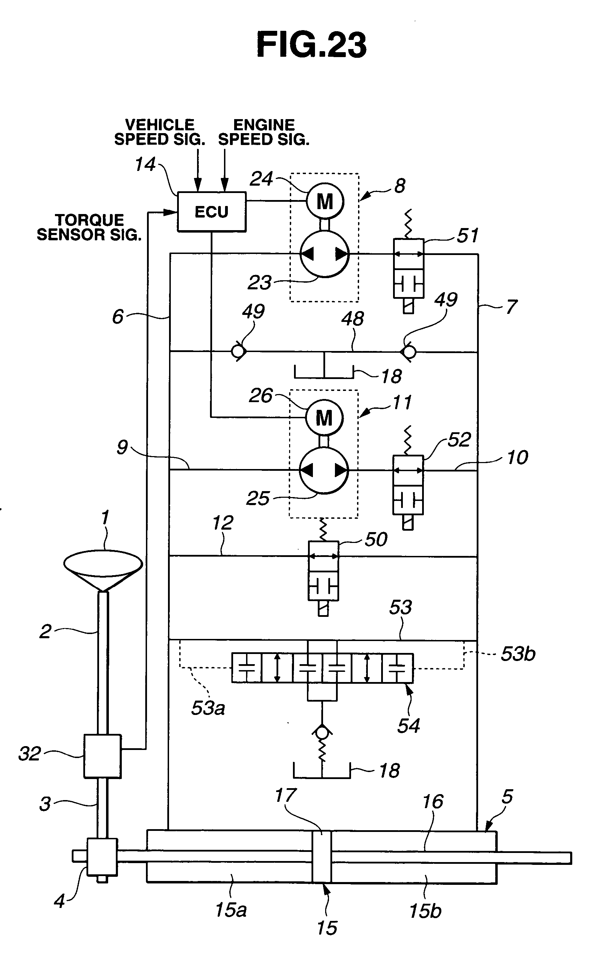

Referring now to Fig. 23, there is shown the system of the ninth embodiment, whose system construction is basically similar to that of the second embodiment, wherein first and second hydraulic pressure supply mechanisms 8 and 11 are provided in the hydraulic line including first and second fluid passages 6 and 7 and third and fourth fluid passages 9 and 10, and arranged in parallel with each other. However, as a whole, the hydraulic circuits of the first and second hydraulic pressure supply mechanisms differ from each other. Additionally, the modified system executes synchronous control or simultaneous control that the first and second hydraulic pressure supply mechanisms 8 and 11 are simultaneously operated.

An inlet passage 48 is connected to reservoir tank 18, and fluidly disposed or interleaved between first and second hydraulic pressure supply mechanisms 8 and 11 in a manner so as to interconnect a substantially midpoint of first fluid passage 6 and a substantially midpoint of second fluid passage 7. Inlet passage 48 is comprised of a first inlet-passage portion located on one side with respect to reservoir tank 18 and a second inlet-passage portion located on the other side. Inlet valves 49, 49 are respectively disposed in the first and second inlet-passage portions, for compensating for a decrease in hydraulic pressure (a lack in working fluid) to be supplied to each of hydraulic pressure chambers 15a and 15b.

A fail-safe valve 50, which is provided in communication passage 12, is comprised of a two-port two-position electromagnetic valve. When an electric current is applied to the fail-safe valve responsively to a command signal from control unit 14, the fail-safe valve is shifted to its valve closed state. Conversely when there is no electric current application, the fail-safe valve is conditioned in its valve open state. That is, a normally-open type fail-safe valve is used. By the use of the normally-open type fail-safe valve, even when a power steering system failure occurs owing to some factors and thus electric-current supply is shut off, fluid communication through communication passage 12 is kept established. As a result, the first and second hydraulic pressure chambers 15a and 15b are communicated with each other, thus ensuring manual steering.

Additionally, a first electromagnetic valve 51 is disposed between the outlet port of first trochoid pump 23 and second fluid passage 7, whereas a second electromagnetic valve 52 is disposed between the outlet port of second trochoid pump 25 and fourth fluid passage 10. Each of electromagnetic valves 51 and 52 is comprised of a normally-open type electromagnetic valve, which is conditioned in a valve closed state when an electric current is applied to the valve responsively to a command signal from control unit 14, and conditioned in a valve open state when there is no electric current application.

Furthermore, a return check valve 54 is provided in a second communication passage 53 intercommunicating first and second fluid passages 6 and 7.

The previously-noted return check valve 54 is constructed by a mechanical valve, which is operated in response to a differential pressure between hydraulic pressures in first and second fluid passages 6 and 7. When hydraulic pressure in first fluid passage 6 becomes higher than that in second fluid passage 7, the return check valve operates responsively to a pilot pressure introduced through a first pilot passage 53a, such that fluid communication between second fluid passage 7 and reservoir tank 18 is established and additionally second hydraulic pressure chamber 15b is opened to the atmosphere.

On the contrary, when hydraulic pressure in second fluid passage 7 becomes higher than that in first fluid passage 6, the return check valve operates responsively to a pilot pressure introduced through a second pilot passage 53b, such that fluid communication between first fluid passage 6 and reservoir tank 18 is established and additionally first hydraulic pressure chamber 15a is opened to the atmosphere. That is, a hydraulic pressure rise in the pressurized side hydraulic circuit can be promoted by quickly draining hydraulic pressure in the non-pressurized side hydraulic circuit into reservoir tank 18, thereby enhancing a steering response.

In the same manner as the previously-described embodiments, in the ninth embodiment, the line lengths and line diameters of first and third fluid passages 6 and 9 are set, so that a pulsation of hydraulic pressure produced by first trochoid pump 23 and a pulsation of hydraulic pressure produced by second trochoid pump 25 cancel out each other. Likewise, the line lengths and line diameters of second and fourth fluid passages 7 and 10 are set, so that a pulsation of hydraulic pressure produced by the first trochoid pump and a pulsation of hydraulic pressure produced by the second trochoid pump cancel out each other.

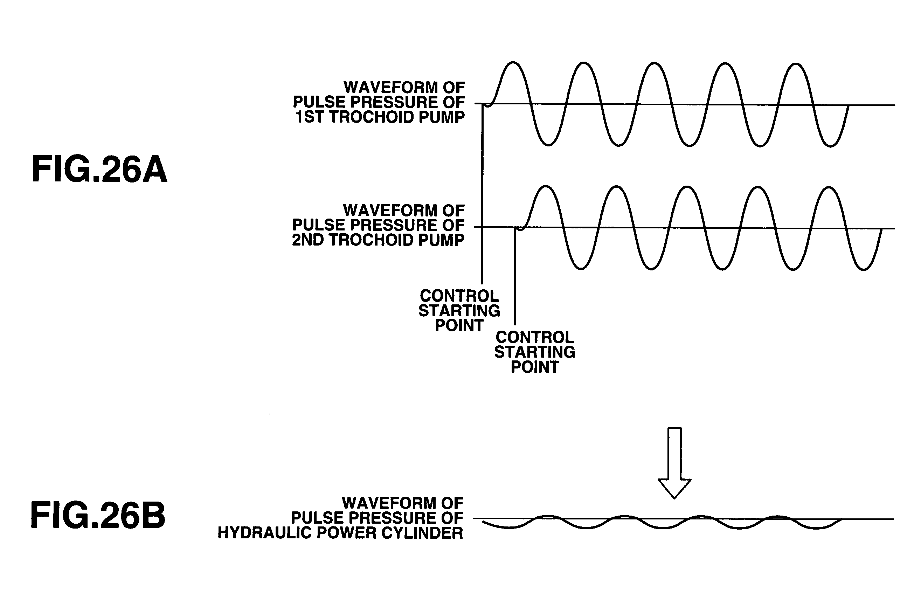

Additionally, as shown in Fig. 26A, pump start-up timings, at which first and second trochoid pumps 23 and 25 are substantially simultaneously operated, are set so that a waveform (a phase) of pulsation of first trochoid pump 23 and a waveform (a phase) of pulsation of second trochoid pump 25 are phase-shifted from each other by 180 degrees for active cancellation. As a result of such active cancellation, an amplitude of a waveform of pulsation (pulse pressure) of first trochoid pump 23 is reduced to an amplitude shown in Fig. 26B.

In the same manner as the previously-described embodiments, when either one of first and second hydraulic pressure supply mechanisms 8 and 11 becomes failed, control unit 14 incorporated in the ninth embodiment operates to stop the one hydraulic pressure supply mechanism, and simultaneously to execute steering assist control processing according to which steering assist force application is performed by operating the electric motor included in the other unfailed hydraulic pressure supply mechanism.

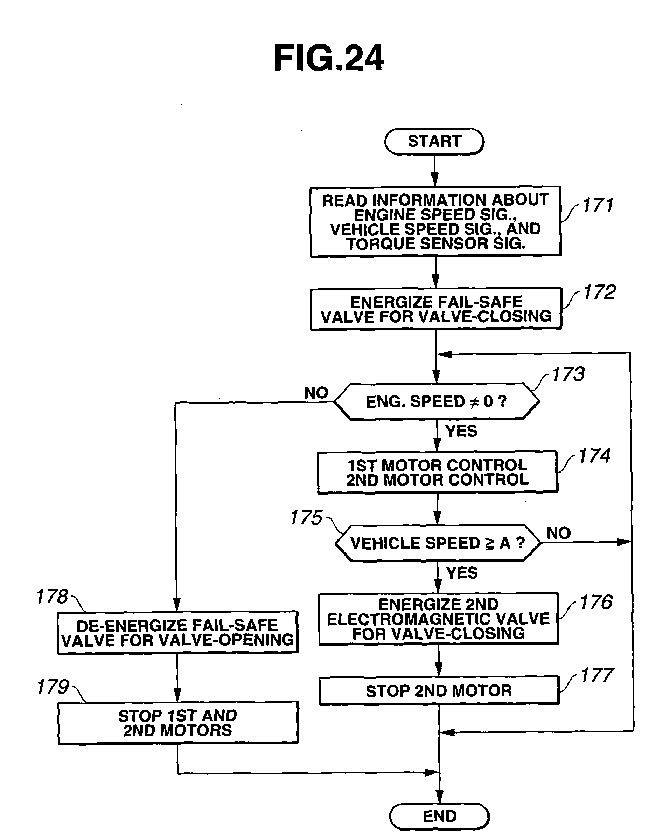

Hereinafter described in reference to the flow chart shown in Fig. 24 is the assist control processing executed by control unit 14.

First, at step 171, the latest up-to-date information, namely the steering torque signal from torque sensor 32, vehicle speed signal from vehicle speed sensor 33, and engine speed signal from crank angle sensor 34, is read. Thereafter, the subroutine proceeds to step 172 where fail-safe valve 50 is shifted to the valve closed state (ON state). Then, step 173 occurs.

At step 173, a check is made to determine whether the engine speed signal value is not equal to "0". When the answer to this step is affirmative (YES), that is, the engine speed signal value is not equal to "0", the subroutine proceeds to step 174. Conversely when the answer to this step is negative (NO), the subroutine proceeds to step 178.

At step 174, first and second electric motors 24 and 26 are controlled responsively to the steering torque signal.

At step 175, a check is made to determine whether the vehicle speed is greater than or equal to a predetermined threshold value A. When the vehicle speed is greater than or equal to the predetermined threshold value, the subroutine proceeds to step 176. Conversely when the vehicle speed is less than the predetermined threshold value, the subroutine returns to step 173.

At step 176, second electromagnetic valve 52 is shifted to the valve closed state (ON state). Thereafter, the subroutine proceeds to step 177 where second electric motor 26 is stopped, and then the current execution cycle of assist control processing terminates.

At step 178, fail-safe valve 50 is shifted to the valve open state (OFF state). Thereafter, the subroutine proceeds to step 179. At step 179, first and second electric motors 24 and 26 are both stopped, and then the current execution cycle of the normal-time-period steering assist control processing terminates.

When step 175 determines that the vehicle speed is less than predetermined threshold value A, a series of steps 173, 174, and 175 are repeatedly executed. That is, at step 174, in order to create a desired steering assist force determined based on the steering torque signal, first and second electric motors 24 and 26 are controlled.

On the contrary, when the vehicle speed is greater than or equal to predetermined threshold value A, the processor determines the current driving state corresponds to a high-speed driving state wherein a required steering assist force is small, and thus a series of steps 173, 174, 175, 176, and 177 are repeatedly executed. That is, at step 176 second electromagnetic valve 52 is shifted to the valve closed state, and thereafter at step 177 second electric motor 26 is stopped.

When the engine becomes stopped, the subroutine proceeds from step 171, through steps 172, 173 and 178 to step 179. That is, at step 178 fail-safe valve 50 is shifted to the valve open state, and thereafter at step 179 first and second electric motors 24 and 26 are stopped.

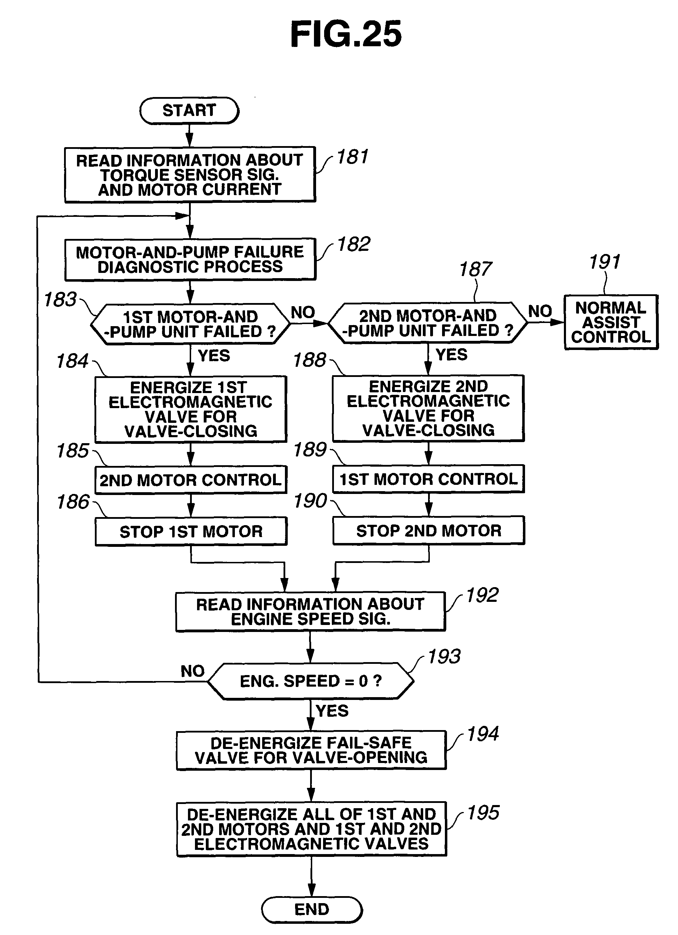

Hereunder described in reference to the flow chart shown in Fig. 25 is the fail-safe control processing. The fail-safe control subroutine is repeatedly executed as time-triggered interrupt routines to be triggered every predetermined time intervals such as 10 milliseconds.

First of all, at step 181, input information about the steering torque signal value and motor electric-current value is read. The subroutine proceeds to step 182 where a motor-and-pump failure diagnostic process is executed. Thereafter, the subroutine proceeds to step 183.

At step 183, a check is made to determine whether first hydraulic pressure supply mechanism 8 is failed. When the first motor-and-pump unit is failed, the subroutine proceeds to step 184 where first electromagnetic valve 51 is energized (ON) and thus shifted to the valve closed state. Thereafter, step 185 occurs.

At step 185, second electric motor 26 is controlled responsively to the steering torque signal. Then, the subroutine proceeds to step 186 where first electric motor 24 is stopped. Thereafter, step 192 occurs.

At step 187, a check is made to determine whether second hydraulic pressure supply mechanism 11 is failed. When the second motor-and-pump unit is failed, the subroutine proceeds to step 188. Conversely when the second motor-and-pump unit is unfailed, the subroutine proceeds to step 191 where the normal steering assist control processing shown in Fig. 24 is executed.

At step 188, second electromagnetic valve 52 is energized (ON) and thus shifted to the valve closed state. Thereafter, the subroutine proceeds to step 189 where first electric motor 24 is controlled responsively to the steering torque signal. Then, step 190 occurs.

At step 190, second electric motor 26 is stopped. Thereafter, the subroutine proceeds to step 192 where information about the engine speed signal is read. Then, the subroutine proceeds to step 193.

At step 193, a check is made to determine whether the engine speed signal value is equal to "0". When the engine speed signal value is equal to "0", the subroutine proceeds to step 194. Conversely when the engine speed signal value is not equal to "0", the subroutine returns to step 182.

At step 194, fail-safe valve 50 is shifted to the valve open state (OFF state). Thereafter, the subroutine proceeds to step 195 where first and second electric motors 24 and 26 and first and second electromagnetic valves 51 and 52 are all de-energized (OFF), and then the current execution cycle of the abnormal-time-period steering assist control processing terminates.

As appreciated from the flow chart shown in Fig. 25, when first and second hydraulic pressure supply mechanisms 8 and 11 are both operating normally, the subroutine flows from step 181 through steps 182, 183, and 187 to step 191. That is, through step 191, the normal steering assist control processing is executed.

When a failure in first hydraulic pressure supply mechanism 8 occurs, as can be seen from the flow chart of Fig. 25, the subroutine flows from step 181 through steps 182, 183, 184, 185, 186, 192, 193, and 194 to step 195.

That is, at step 184 first electromagnetic valve 51 is energized (ON) and thus shifted to the valve closed state. On the one hand, at step 185, in order to create a desired steering assist force determined based on the steering torque signal, second electric motor 26 is controlled. On the other hand, at step 186 first electric motor 24 is stopped.

On the contrary, when a failure in second hydraulic pressure supply mechanism 11 occurs, as can be seen from the flow chart of Fig. 25, the subroutine flows from step 181 through steps 182, 183, 187, 188, 189, 190, 192, 193 and 194 to step 195. That is, at step 188 second electromagnetic valve 52 is energized (ON) and thus shifted to the valve closed state. On the one hand, at step 189, in order to create a desired steering assist force determined based on the steering torque signal, first electric motor 24 is controlled. On the other hand, at step 190 second electric motor 26 is stopped.

Therefore, according to the ninth embodiment, when either one of first and second hydraulic pressure supply mechanisms 8 and 11 has been failed, a driving command signal is continuously output to the electric motor included in the unfailed hydraulic pressure supply mechanism, thereby ensuring continuous steering assist force application.

Additionally, during high-speed vehicle driving, wherein a required steering assist force is small, second electric motor 26 is controlled to the stopped state, and steering assist control processing is performed by operating only the first hydraulic pressure supply mechanism 8. In this manner, during an operating mode wherein a required steering assist force is small, the system utilizes only one pump. This contributes to reduced pulsation of hydraulic pressure of working fluid discharged from the pump, and reduced working electric-power consumption, that is, reduced battery electric-power consumption.

Furthermore, the line lengths and line diameters of first and third fluid passages 6 and 9 are set to the specified lengths and diameters and also the line lengths and line diameters of second and fourth fluid passages 7 and 10 are set to the specified lengths and diameters, for the purpose of an attenuation in pulsation of hydraulic pressure produced by each of first and second trochoid pumps 23 and 25. Thus, it is possible to reduce pulsation of hydraulic pressure supplied to each of hydraulic pressure chambers 15a and 15b.

Additionally, as can be seen from Figs. 26A and 26B, a discharge timing of first trochoid pump 23 and a discharge timing of second trochoid pump 25 are set so that pulsations of the first and second pumps cancel out each other. Thus, it is possible to more greatly reduce pulsation of hydraulic pressure of working fluid discharged from the pump.

Moreover, the first motor-and-pump of first hydraulic pressure supply mechanism 8 and the second motor-and-pump of second hydraulic pressure supply mechanism 11 are constructed to be identical to each other in capacity. Thus, it is possible to facilitate pulsation-reduction control.

### [TENTH EMBODIMENT]

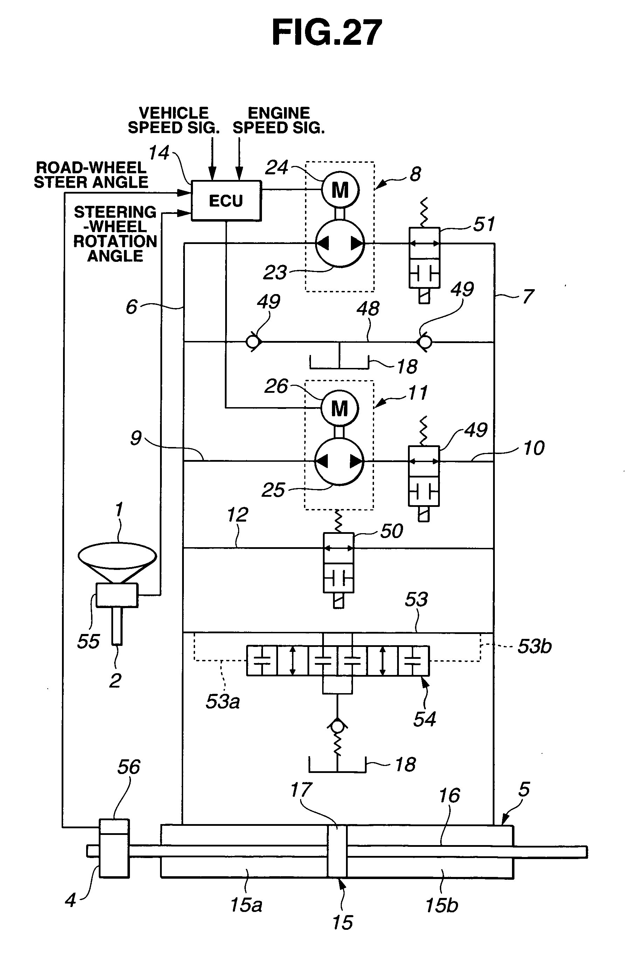

Referring now to Fig. 27, there is shown the system of the tenth embodiment whose system construction is basically similar to that of the ninth embodiment. The tenth embodiment is different from the ninth embodiment in that, in the tenth embodiment steering shaft 2 and steering gear mechanism 4 are not mechanically linked to each other.

That is, steering gear mechanism 4 is actuated or driven by means of an electric motor (not shown), which is controlled by control unit 14. On the other hand, steering wheel 1 is equipped with a steering-wheel angle sensor 55 that detects a steering-wheel rotation angle input to the steering wheel by the driver.

Steering gear mechanism 4 is equipped with a steered-road-wheel steer angle sensor 56 that detects a steer angle at steered road wheels. Steering-wheel angle sensor 55 and steered-road-wheel steer angle sensor 56 construct a steering-state detection means.

Therefore, control unit 14 outputs a driving command signal for first electric motor 24 and a driving command signal for second electric motor 26, based on the steering-wheel rotation angle signal from steering-wheel angle sensor 55 and the steered-road-wheel steer angle signal from steered-road-wheel steer angle sensor 56.

As set forth above, according to the tenth embodiment, steering wheel 1 and steering gear mechanism 4 are not mechanically linked to each other, thereby enhancing the degree of freedom of layout.

### [ELEVENTH EMBODIMENT]

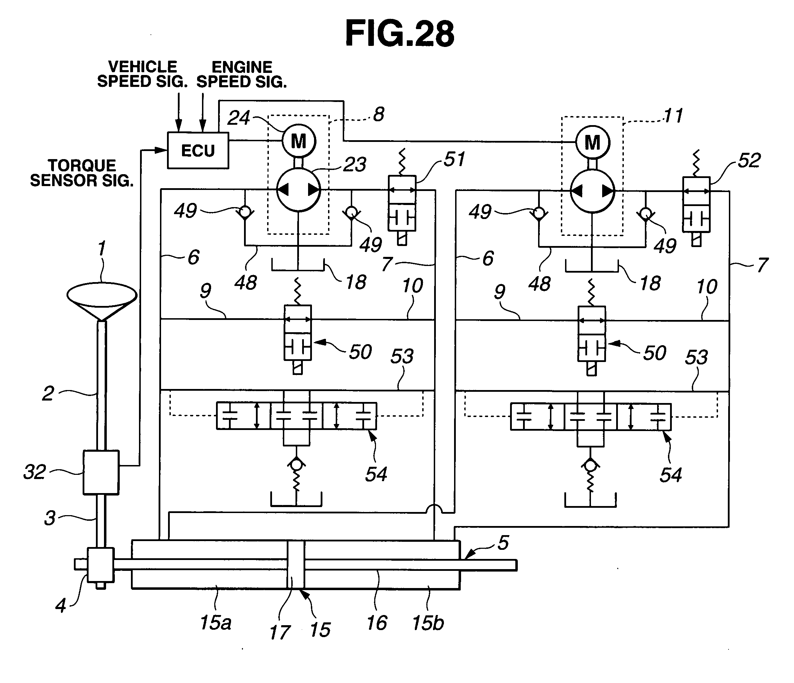

Referring now to Fig. 28, there is shown the system of the eleventh embodiment, which is characterized in that first and third fluid passages 6 and 9 are connected to first hydraulic chamber 15a, and second and fourth fluid passages 7 and 10 are connected to second hydraulic chamber 15b, and additionally the hydraulic circuit for first hydraulic pressure supply mechanism 8 and the hydraulic circuit for second hydraulic pressure supply mechanism 11 are provided separately from each other.

Therefore, according to the eleventh embodiment, first and second hydraulic pressure supply mechanisms 8 and 11 are connected to hydraulic power cylinder 5, independently of each other. In this manner, the hydraulic circuits for the respective hydraulic pressure supply mechanisms are provided independently of each other, and thus the system of the eleventh embodiment can be applied to a general housing containing a motor-and-pump unit.

### [TWELFTH EMBODIMENT]

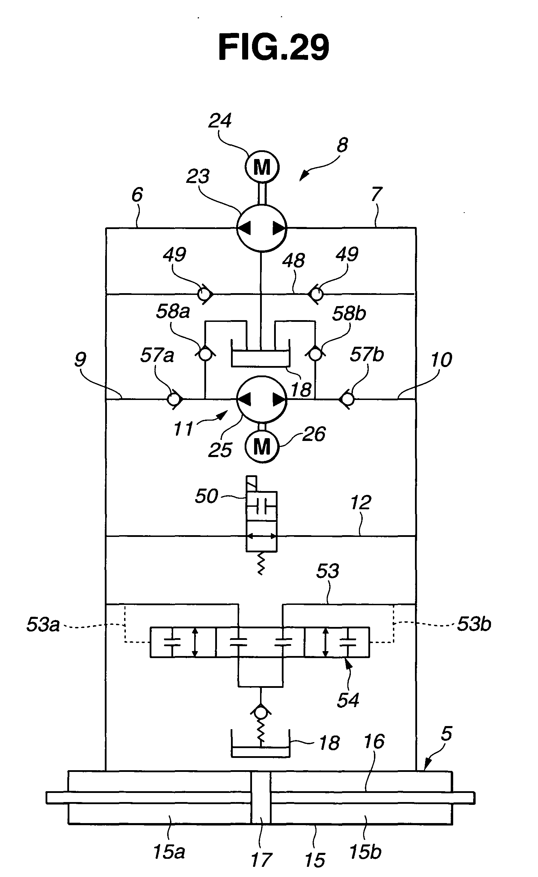

Referring now to Fig. 29, there is shown the system of the twelfth embodiment, whose system construction is basically similar to that of the ninth embodiment. The twelfth embodiment is different from the ninth embodiment in that the pump capacity of reversible-type second trochoid pump 25 of second hydraulic pressure supply mechanism 11 is set to be less than that of reversible-type first trochoid pump 23 of first hydraulic pressure supply mechanism 8.

Additionally, the previously-noted first and second fluid-passage directional control valves are both eliminated. Instead of using the directional control valves, a check valve 57a is disposed substantially in a middle of third fluid passage 9, whereas a check valve 57b is disposed substantially in a middle of fourth fluid passage 10. Check valve 57a has a one-way check-valve function that permits free flow of working fluid (hydraulic pressure) discharged from a first one of the two ports of second trochoid pump 25 in one direction in which working fluid flows into first fluid passage 6, and prevents any flow in the opposite direction. Check valve 57b has a one-way check-valve function that permits free flow of working fluid (hydraulic pressure) discharged from the second port of second trochoid pump 25 in one direction in which working fluid flows into second fluid passage 7, and prevents any flow in the opposite direction.

Furthermore, inlet valves 58a and 58b are disposed in respective inlet passages provided inside of check valves 57a and 57b, for compensating for a lack in working fluid by delivering working fluid in reservoir tank 18 into the inlet port side of second trochoid pump 25.

During a normal condition, by means of control unit 14, only the first hydraulic pressure supply mechanism 8 is operated and additionally second hydraulic pressure supply mechanism 11 is conditioned in a stand-by state. When first hydraulic pressure supply mechanism 8 is failed and thus stopped, second hydraulic pressure supply mechanism 11 comes into operation, thus ensuring steering assist force application.

Thus, the twelfth embodiment can provide the same operation and effects as the ninth embodiment. In the twelfth embodiment, expensive electromagnetic valves are eliminated, thus ensuring reduced costs.

### [THIRTEENTH EMBODIMENT]

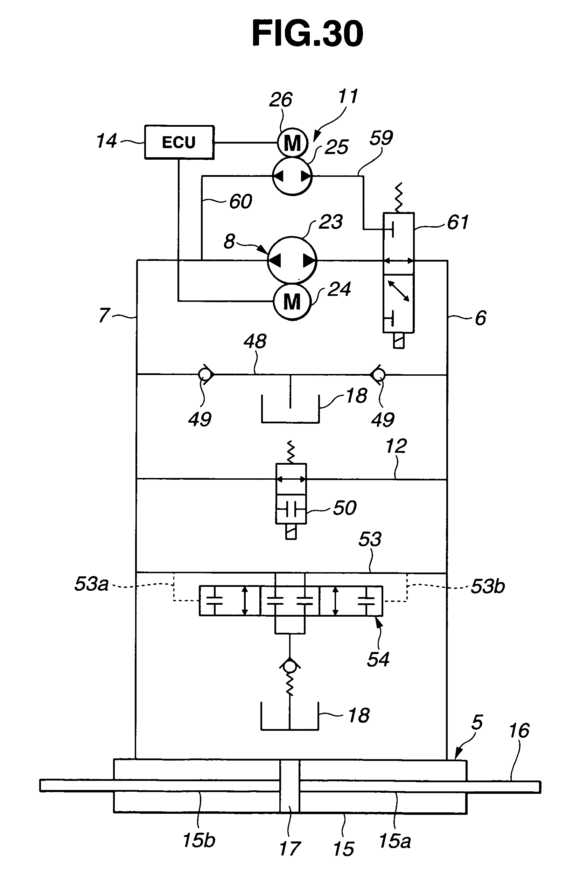

Referring now to Fig. 30, there is shown the system of the thirteenth embodiment whose system construction is basically similar to the ninth embodiment. The thirteenth embodiment is different from the ninth embodiment in that second hydraulic pressure supply mechanism 11 is arranged in parallel with first hydraulic pressure supply mechanism 8 through first and second sub fluid passages 59 and 60.

Second sub fluid passage 60 is connected directly to second fluid passage 7 in a manner so as to directly communicate second hydraulic pressure chamber 15b. On the other hand, first sub fluid passage 59 is connected to first fluid passage 6 through an electromagnetic directional control valve 61, which is disposed between the first sub fluid passage and first fluid passage 6.

Electromagnetic directional control valve 61 is responsive to a control command signal from control unit 14 to switch between first fluid passage 6 and first sub fluid passage 59.

That is, during a normal condition, fluid communication between first hydraulic pressure supply mechanism 8 and first fluid passage 6 is established and simultaneously fluid communication between first sub fluid passage 59 and first fluid passage 6 is blocked. On the contrary, when first hydraulic pressure supply mechanism 8 is failed, fluid communication between first hydraulic pressure supply mechanism 8 and first fluid passage 6 is blocked and simultaneously fluid communication between first sub fluid passage 59 and first fluid passage 6 is established.

Additionally, during the normal condition, only the first hydraulic pressure supply mechanism 8 is operated and additionally second hydraulic pressure supply mechanism 11 is controlled to a stand-by state.

Thus, during the normal condition, hydraulic pressure of working fluid discharged from a first one of the outlet ports of first trochoid pump 23, directed to first fluid passage 6, is supplied through electromagnetic directional control valve 61 via first fluid passage 6 to first hydraulic pressure chamber 15a. On the other hand, hydraulic pressure of working fluid discharged from the second outlet port is supplied directly to second hydraulic pressure chamber 15b.

When first hydraulic pressure supply mechanism 8 is failed, hydraulic pressure of working fluid discharged from a first one of the outlet ports of second trochoid pump 25 is supplied through first sub fluid passage 59 and electromagnetic directional control valve 61, which is energized and switched to its energized valve position, and first fluid passage 6 to first hydraulic pressure chamber 15a. On the other hand, hydraulic pressure of working fluid discharged from the second outlet port of the second pump is supplied through second sub fluid passage 60 and second fluid passage 7 directly to second hydraulic pressure chamber 15b.

By way of a series of control operations as discussed above, steering assist force application can be ensured.

### [FOURTEENTH EMBODIMENT]

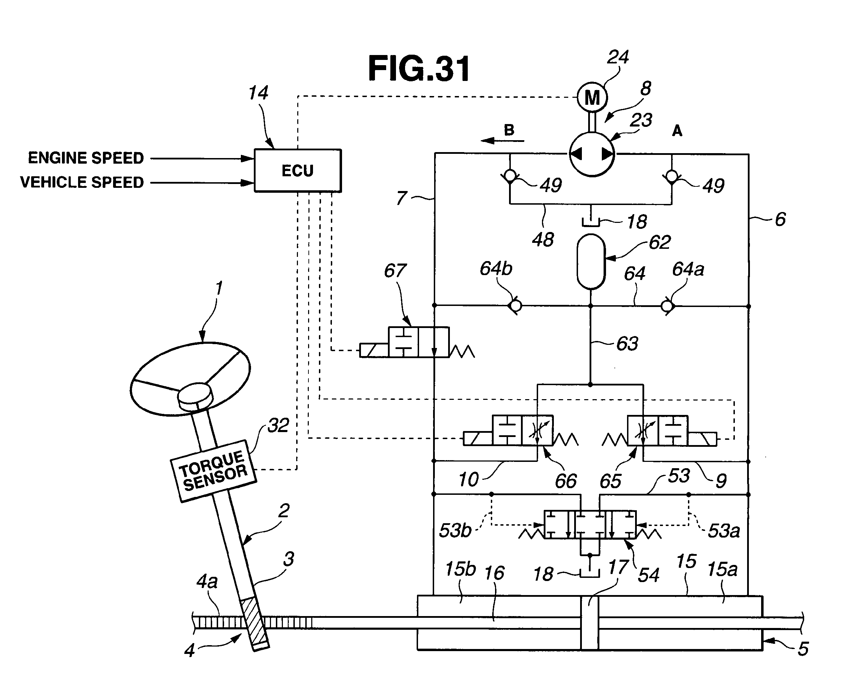

Referring now to Fig. 31, there is shown the system of the fourteenth embodiment, whose system construction is basically similar to the ninth embodiment, in particular, for the construction of first hydraulic pressure supply mechanism 8, and the constructions of inlet valves 49, 49 disposed in inlet passage 48, and return check valve 54. The fourteenth embodiment is different from the ninth embodiment in that in the fourteenth embodiment second hydraulic pressure supply mechanism 11 is constructed by a hydraulic accumulator 62 in which hydraulic pressure is accumulated or stored.

That is, accumulator 62 is connected to an intermediate fluid passage 63, which is connected to a junction of third and fourth fluid passages 9 and 10. Furthermore, accumulator 62 is communicated with the respective ports of first trochoid pump 23 via a pressure-accumulation fluid passage 64 whose both ends are respectively connected to first and second fluid passages 6 and 7. Check valves 64a and 64b, associated with respective outlet ports of first trochoid pump 23, are disposed in pressure-accumulation fluid passage 64, and being able to open when the discharge pressure of working fluid discharged from each of the outlet ports of the first trochoid pump exceeds a set pressure value of accumulator 62, for accumulating or storing surplus hydraulic pressure in accumulator 62.

Additionally, a first pressure-accumulation control valve (switching valve) 65 is disposed in third fluid passage 9 for opening and closing the third fluid passage, whereas a second pressure-accumulation control valve (switching valve) 66 is disposed in fourth fluid passage 10 for opening and closing the fourth fluid passage. Each of first and second pressure-accumulation control valves 65 and 66 is constructed by a normally-open type electromagnetic valve. The opening degree of each of the pressure-accumulation control valves is adjusted or controlled in response to a control signal from control unit 14.

With the previously-noted arrangement, when first hydraulic pressure supply mechanism 8 is failed and then conditioned in its stopped state, accumulator 62 operates in a manner so as to selectively deliver the stored high hydraulic pressure through first and second pressure-accumulation control valves 65 and 66 to either one of first and second hydraulic pressure chambers 15a and 15b.

Moreover, an electromagnetic directional control valve 67 is disposed in an intermediate hydraulic-line section of second fluid passage 7 between pressure-accumulation fluid passage 64 and third fluid passage 10. Electromagnetic directional control valve 67 is a normally-open type. This electromagnetic valve is also responsive to a control signal from control unit 14, for opening and closing second fluid passage 7.

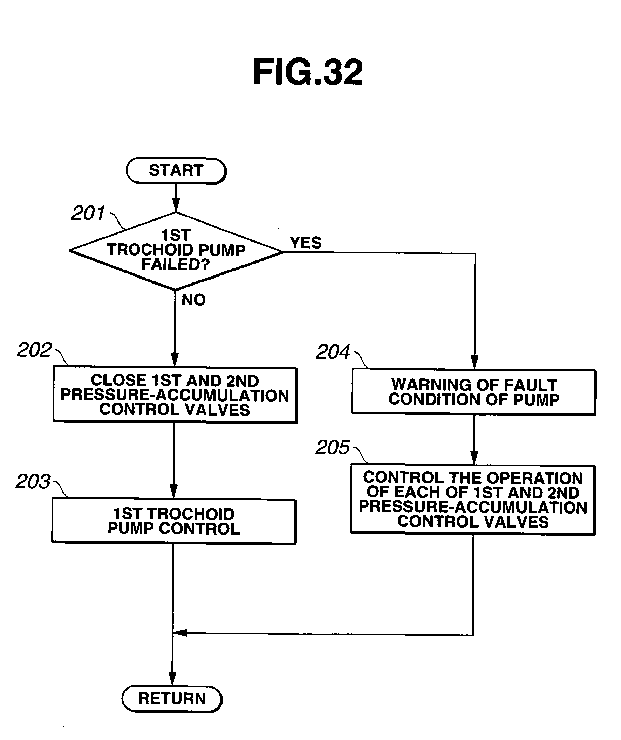

Hereinafter described in reference to the control flow of Fig. 32 is the power-steering-system control routine executed by control unit 14.

First, at step 201, a check is made to determine, based on the method of failure detection as described previously, whether a failure in first hydraulic pressure supply mechanism 8, such as a failure in first trochoid pump 23, occurs and malfunctions. When it is determined that the first trochoid pump is unfailed and operating normally, the subroutine proceeds to step 202. Hereupon, a failure in the first hydraulic pressure supply mechanism includes a state wherein first trochoid pump 23 is inoperative owing to a lack of battery charge, a failure in first electric motor 24, and the like.

At step 202, first and second pressure-accumulation control valves 65 and 66 are controlled to their valve closed states. Then, at step 203, a control command signal, which is determined based on the steering torque signal, is output to first electric motor 24, to drive first trochoid pump 23. As a result, either one of first and second hydraulic pressure chambers 15a and 15b is selectively pressurized, thereby enabling desired steering assist force application.

Conversely when step 201 determines that a failure in the first trochoid pump occurs, the subroutine proceeds to step 204, where the warning lamp is lighted to inform the driver of a fault condition of the first trochoid pump.

Subsequently to the above, at step 205, the opening and closing of each of first and second pressure-accumulation control valves 65 and 66 and the opening degrees of the same are adjusted or controlled based on the steering torque signal. Therefore, hydraulic pressure stored in accumulator 62 can be selectively supplied to either one of first and second hydraulic pressure chambers 15a and 15b, thereby enabling desired steering assist force application.

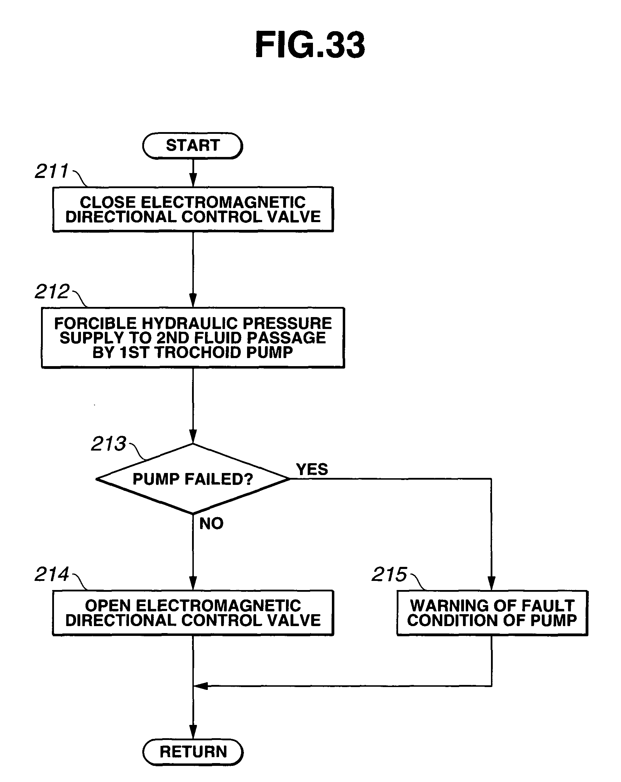

Hereinafter described in reference to the flow chart of Fig. 33 is the forcible pressure-accumulation control processing for hydraulic accumulator 62, which is executed only at the initial stage of the power steering system control initiated after the ignition key (ignition switch) has been turned ON.

At step 211, electromagnetic directional control valve 67 is controlled to its valve closed state. At step 212, high hydraulic pressure is supplied from the outlet port of first trochoid pump 23 into second fluid passage 7, in which electromagnetic directional control valve 67 is disposed. As a result, hydraulic pressure is forcibly fed or delivered from second fluid passage 7 via the pressure-accumulation fluid passage 64 and second check valve 64b into accumulator 62, for forcible pressure accumulation. The forcible pressure accumulation control processing is executed continuously for a predetermined time period or until it is determined, based on a sensor value of a hydraulic pressure sensor generally installed on a pressure accumulator, that a pressure level of hydraulic pressure in accumulator 62 reaches a predetermined pressure value.

Next, at step 213, a check is made to determine whether first trochoid pump 23 is failed. When the first trochoid pump is unfailed (normal), the subroutine proceeds to step 214 where electromagnetic directional control valve 67 is controlled to its valve open state, and whereby the normal-time-period steering assist control processing is ensured.

Conversely when the first trochoid pump is failed (abnormal), the subroutine proceeds to step 215. At step 215, the warning lamp is lighted to inform the driver of a fault condition of first trochoid pump 23.

As set forth above, the fourteenth embodiment can provide the same operation and effects as the ninth embodiment. The fourteenth embodiment uses hydraulic accumulator 62 as second hydraulic pressure supply mechanism 11, thus ensuring simplified construction and reduced costs.

Although hydraulic pressure in accumulator 62 tends to gradually reduce owing to steering assist force application during a pump failure, the hydraulic accumulator can provide an adequate steering assist force if the vehicle runs for a comparatively short time.

Additionally, according to the system of the fourteenth embodiment, it is possible to forcibly quickly store hydraulic pressure in accumulator 62 at the initial stage of the power steering system control, and simultaneously to be able to easily make a diagnosis on a failure or abnormality in first trochoid pump 23, utilizing the forcible pressure-accumulating action.

In the shown embodiment, electromagnetic directional control valve 67 is disposed in the second fluid passage side. In lieu thereof, the electromagnetic directional control valve may be disposed in only the first fluid passage 6 or disposed in both of the first and second fluid passages 6 and 7.

### [FIFTEENTH EMBODIMENT]

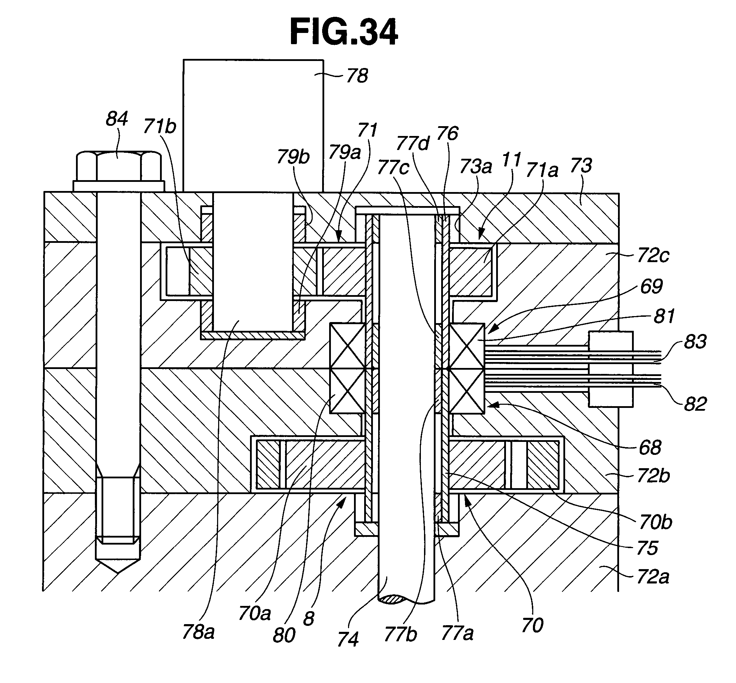

Referring now to Fig. 34, there is shown the system of the fifteenth embodiment, in particular, a cross section of a pump unit accommodating therein the first and second pumps, corresponding to trochoid pumps 23 and 25 of the previously-described embodiment. In the fifteenth embodiment, a pair of clutches, namely first and second electromagnetic clutches 68 and 69 are provided between first and second hydraulic pressure supply mechanisms 8 and 11 laid out in series to each other. When either one of hydraulic pressure supply mechanisms 8 and 11 becomes failed, the system is designed or constructed in a manner so as to engage or disengage each of electromagnetic clutches 68 and 69, in response to respective control signals from control unit 14.

More concretely, a trochoid pump 70, which serves as a reversible pump of first hydraulic pressure supply mechanism 8, and an external gear pump 71, which serves as a reversible pump of second hydraulic pressure supply mechanism 11, are laid out in series to each other and also located in an internal space defined inside of a side cover 73 and three-split housing portions 72a, 72b, and 72c, integrally connected to each other by means of a bolt 84. First and second pumps 70 and 71 are basically supported by a common drive shaft 74. These pumps are constructed to be driven through the common drive shaft via respective electromagnetic clutches 68 and 69, and a first outer shaft 75 and a second outer shaft 76, both rotatably mounted on the outer periphery of drive shaft 74 through four bushings 77a-77d such that rotary motion of each of the outer shafts relative to the drive shaft is permitted.

Regarding operation of both pumps 70 and 71, suppose that, when the common drive shaft 74 is driven by a first electric motor (not shown), first hydraulic pressure supply mechanism 8 becomes failed. In such a case, the system of the fifteenth embodiment operates to drive only the second external gear pump 71 by means of a second electric motor 78.

Hereunder explained concretely are the details of the pump structure. Trochoid pump 70 has a general pump structure that includes an inner gear 70a accommodated in the second housing portion 72b and fixedly connected onto the outer periphery of first outer shaft 75, and a ring-shaped outer gear 70b in meshed-engagement with the outer toothed portion of inner gear 70a.

On the other hand, external gear pump 71 is comprised of an outer-toothed main gear 71a, which is accommodated in the internal space defined between the third housing portion 72c and side cover 73 integrally connected to each other by means of the bolt, and fixedly connected to the outer periphery of second outer shaft 76, and an outer-toothed sub gear 71b, which is accommodated in the internal space defined between the third housing portion and the side cover integrally connected to each other by means of the bolt, and fixedly connected to a motor shaft (rotation axis) 78a of the second electric motor and in meshed-engagement with main gear 71a.

Drive shaft 74 is accommodated in the internal space defined in the housing portions 72a-72c together with each of outer shafts 75-76, such that the drive shaft penetrates each of the housing portions. One end of the drive shaft is connected to the first electric motor, whereas the other end of the drive shaft is inserted into a support hole defined in side cover 73. First and second outer shafts 75 and 76 are formed as a pair of cylindrical-hollow metal shafts, which are coaxially arranged with each other with respect to the axis of the drive shaft, and rotatably supported through the previously-noted four cylindrical bushings 77a-77d, installed on the outer peripheral surface of drive shaft 74.

The first end of the previously-noted motor shaft 78a is rotatably supported by a cylindrical bushing 79a installed in the third housing 72c, whereas the second end of the motor shaft is rotatably supported by a cylindrical bushing 79b installed in side cover 73.

First electromagnetic clutch 68 is comprised of at least a first electromagnetic coil 80, which is provided on the outer periphery of one shaft end of outer shaft 75 installed in the second housing portion 72b, and a wave-shaped spring (a wavy spring). On the other hand, second electromagnetic clutch 69 is comprised of at least a second electromagnetic coil 81, which is located in close proximity to one side wall of first electromagnetic coil 80 and provided on the outer periphery of one shaft end of outer shaft 76 installed in the third housing portion 72c, and a wave-shaped spring (a wavy spring).

First and second electromagnetic coils 80 and 81 are connected to control unit 14 through wiring harnesses 82 and 83, so that each of the electromagnetic coils is degaussed (de-energized) or magnetized (energized) responsively to a command current from the control unit. When hydraulic pressure supply mechanisms 8 and 11 are both operating normally, first and second electromagnetic coils 80 and 81 are energized with the result that drive shaft 74 and each of first and second outer shafts 75 and 76 coupled with each other. On the contrary assuming that first hydraulic pressure supply mechanism 8 becomes failed and stopped, first and second electromagnetic coils 80 and 81 are de-energized, with the result that drive shaft 74 and each of first and second outer shafts 75 and 76 uncoupled from each other. Additionally, in presence of the first hydraulic pressure supply mechanism failure, second electric motor 78 is driven.

Conversely when second hydraulic pressure supply mechanism 11 becomes failed and stopped, command-current supply to second electromagnetic coil 81 is shut off, while command-current supply to first electromagnetic coil 80 is continued. As a result, first outer shaft 75 is coupled with drive shaft 74 and kept in its coupled state.

The hydraulic circuits of first and second hydraulic pressure supply mechanisms 8 and 11 of the fifteenth embodiment are constructed to be identical to those of first embodiment.

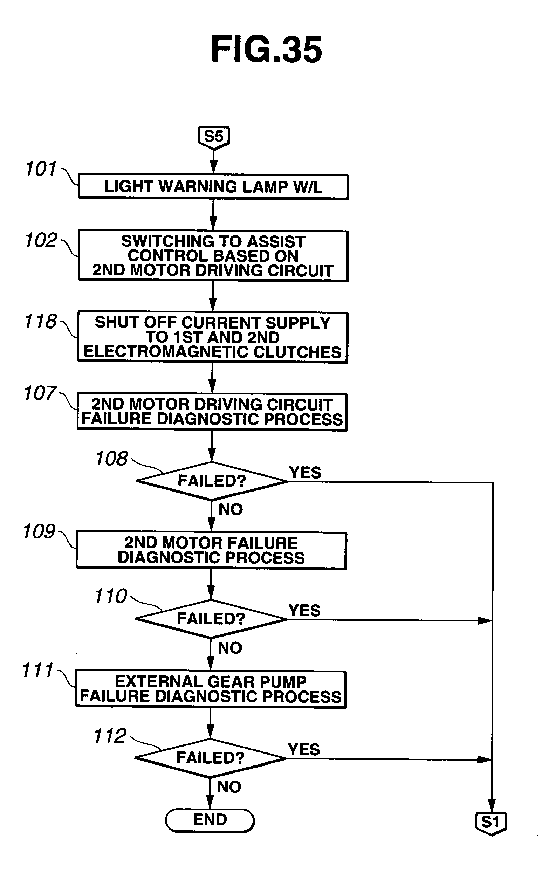

Therefore, the system of the fifteenth embodiment can execute the same control program as the first embodiment by means of control unit 14, when either one of first and second hydraulic pressure supply mechanisms 8 and 11 is failed. In particular, the system of the fifteenth embodiment can execute the control routine shown in Fig. 35, by way of the use of the electromagnetic clutches. The control program executed by the system of the fifteenth embodiment somewhat differs from that of the fifth stage. A different point from the flow chart of the fifth stage S5, which is shown in Fig. 9 and initiated when a failure in first hydraulic pressure supply mechanism 8 occurs, is that switching process (switching control) to second electric-motor driving circuit 40 is executed only through step 102, without step 106. That is, in the fifteenth embodiment, steps 103-106 are eliminated.

After the switching control to second electric-motor driving circuit 40 has been executed, the subroutine proceeds to step 118 where a command-current supply shut-off process is made to shut off electric-current supply of command current to each of first and second electromagnetic clutches 68 and 69. As a result of this, trochoid pump (internal gear pump) 70 and external gear pump 71 are kept uncoupled from drive shaft 74.

Subsequently to the above, at step 107, a failure diagnostic process is executed for making a diagnosis on a failure in second electric-motor driving circuit 40.

Next, at step 108, a check is made to determine whether second electric-motor driving circuit 40 is failed. When the second electric-motor driving circuit is unfailed, the subroutine proceeds to step 109 where a failure diagnostic process is executed for making a diagnosis on a failure in second electric motor 78. At step 110, a check is made to determine whether second electric motor 78 is failed. When the second electric motor is unfailed, the subroutine proceeds to step 111 where a failure diagnostic process is executed for making a diagnosis on a failure in external gear pump 71 (corresponding to the second trochoid pump of Fig. 9). At step 112, a check is made to determine whether the second trochoid pump is failed. When the second trochoid pump is unfailed, the subroutine terminates. In this manner, it is possible to ensure steering assist force application by means of second hydraulic pressure supply mechanism 11.

Assuming that each of failure diagnostic steps 108, 110, and 112 determines that a failure occurs, that is, second hydraulic pressure supply mechanism 11 itself has been failed and stopped, the subroutine shifts to the first stage S1 in order to execute valve-opening control for fail-safe valve 13, thus ensuring manual steering.

On the contrary, suppose that only the second hydraulic pressure supply mechanism 11 is failed and stopped, while first hydraulic pressure supply mechanism 8 is operating normally. As discussed above, on the one hand, command-current supply to second electromagnetic coil 81 is shut off so as to uncouple external gear pump 71 from drive shaft 74. On the other hand, the coupled state of trochoid pump 70 and drive shaft 74 is maintained. As a result of this, it is possible to ensure steering assist force application by means of first hydraulic pressure supply mechanism 8.

### [SIXTEENTH EMBODIMENT]

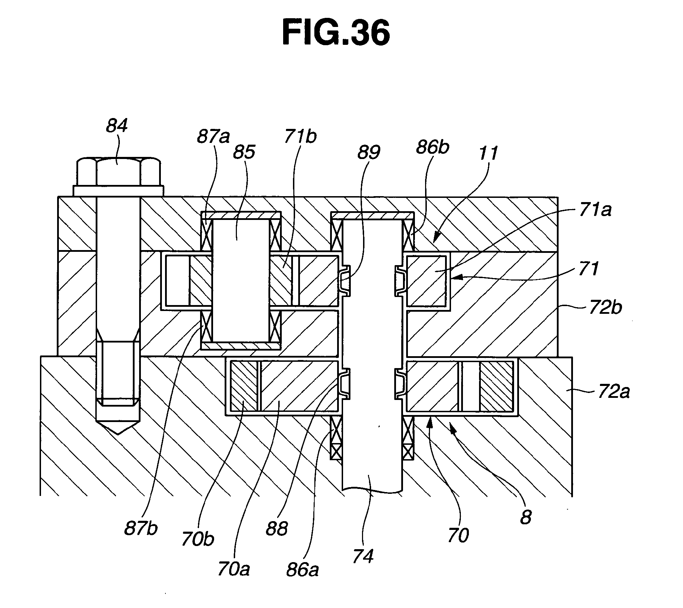

Referring now to Fig. 36, there is shown the system of the sixteenth embodiment, in particular, a cross section of a pump unit accommodating therein the first and second pumps, corresponding to trochoid pumps 23 and 25 of the previously-described embodiment. In the system of the sixteenth embodiment, when either a failure in first hydraulic pressure supply mechanism 8 or a failure in first hydraulic pressure supply mechanism 11 occurs, switching between the two pressure supply mechanisms is performed by mechanical means rather than an electronic device including the control unit, in order to supplement a steering assist force even in presence of a failure in the first or second pressure supply mechanisms. The basic system construction of the sixteenth embodiment is similar to that of the fifteenth embodiment. Thus, the same reference signs used to designate elements in the system of the fifteenth embodiment will be applied to the corresponding elements used in the sixteenth embodiment for the purpose of simplification of the disclosure.

More concretely, trochoid pump 70, which serves as a reversible pump of first hydraulic pressure supply mechanism 8, and external gear pump 71, which serves as a reversible pump of second hydraulic pressure supply mechanism 11, are laid out in series to each other and also located in an internal space defined inside of the first and second housing portions 72a and 72b. Both of pumps 70 and 71 are constructed to be driven by a single electric motor (not shown) through the common drive shaft 74.

Trochoid pump 70 is constructed by inner gear 70a fixedly connected onto the outer periphery of drive shaft 74, and ring-shaped outer gear 70b in meshed-engagement with the outer toothed portion of inner gear 70a.

On the other hand, external gear pump 71 is comprised of main gear 71a, which is accommodated in the internal space defined between the second housing portion 72b and side cover 73 integrally connected to the front end of the second housing portion 72b by means of bolt 84, and fixedly connected to the outer periphery of the tip of drive shaft 74 in such a manner as to be coaxially arranged with the axis of the drive shaft, and sub gear 71b, which is located side by side with respect to main gear 71a and rotatably supported by a rotatable shaft 85, and in meshed-engagement with main gear 71a.

The shaft section of drive shaft 74, corresponding to the installation position of first trochoid pump 70, is rotatably supported by the first housing portion 72a through a bearing 86a, whereas the tip end of the drive shaft is rotatably supported by side cover 73 through a bearing 86b. On the other hand, one end of rotatable shaft 85 is supported by side cover 73 through a bearing 87a, whereas the other end of the rotatable shaft is supported by the second housing portion 72b through a bearing 87b.

A first annular torque limiter 88 is interleaved between drive shaft 74 and inner gear 70a, for creating a slippage between the two moving parts, namely drive shaft 74 and inner gear 70a, via the first torque limiter, when an excessive load, grater than a specified torque value, is transmitted through them and thus an overload condition takes place. In a similar manner, a second annular torque limiter 89 is interleaved between the tip end of drive shaft 74 and main gear 71a, for creating a slippage between the two moving parts, namely drive shaft 74 and main gear 71a, via the second torque limiter, when an excessive load, grater than a specified torque value, is transmitted through them and thus an overload condition takes place.

Therefore, according to the system of the sixteenth embodiment, when, during a normal condition, drive shaft 74 is driven by the electric motor in the normal-rotational direction or in the reverse-rotational direction, trochoid pump 70 and external gear pump 71 are both driven in the same rotational direction. Thus, hydraulic pressure can be selectively supplied to either one of hydraulic pressure chambers of the hydraulic power cylinder (not shown) always by rotary motions of the two pumps, thereby ensuring steering assist force application.

Suppose that trochoid pump 70 becomes inoperative owing to an internal gear pump system failure and thus an excessive load greater than the specified torque value is added between drive shaft 74 and inner gear 70a. A slippage between the two moving parts, namely drive shaft 74 and inner gear 70a, is created by means of the first torque limiter 88. In such a case, drive shaft 74 continuously drives the main gear, and therefore it is possible to apply a steering assist force by the normally-operating external gear pump 71.

Conversely suppose that external gear pump 71 becomes inoperative owing to an external gear pump system failure, and thus an overload condition occurs. A slippage between the two moving parts, namely drive shaft 74 and main gear 71a, is created by means of the second torque limiter 89. In such a case, it is possible to apply a steering assist force by the normally-operating trochoid pump 70.

On the contrary, suppose that first and second hydraulic pressure supply mechanisms 8 and 11 have been failed. In such a case, main gar 71a as well as the inner gear tend to slip with respect to drive shaft 74, and as a result there is no hydraulic pressure supply from first and second hydraulic pressure supply mechanisms 8 and 11.

Under these conditions, when an increase in steering load occurs, there is an increased tendency for a steering torque sensor (not shown) to detect a great steering torque that cannot be detected under the normal condition. As soon as the processor of control unit 14 determines that the torque sensor signal value exceeds a predetermined torque threshold value, control unit 14 operates to open the fail-safe valve, thus ensuring manual steering.

Hereinafter explained is the other technical concept (technical features) carried out by the previously-described embodiments, except the inventive concept as defined by claims.

(1) A power steering system as set forth in claim 3, wherein a torque limiter is provided between the reversible pump and the electric motor.

(2) A power steering system as set forth in claim 3, wherein an electromagnetic clutch is provided between the reversible pump and the electric motor, for uncoupling the reversible pump from the electric motor via the electromagnetic clutch, when the failure detection means determines that the first hydraulic pressure supply means is failed.

(3) A power steering system as set forth in claim 10, wherein the second fluid pressure supply means comprises a hydraulic pressure source except the reversible pump.

(4) A power steering system as set forth in claim 1, wherein the reversible pump comprises a trochoid pump.

(5) A power steering system as set forth in claim 2, wherein the second hydraulic pressure supply means comprises a reversible pump that relatively supplies working fluid to hydraulic pressure chambers of the hydraulic power cylinder via the third and fourth fluid passages.

(6) A power steering system as set forth in claim 4, wherein the second hydraulic pressure supply means comprises a unidirectional pump and a fluid-passage directional control valve.

(7) A power steering system as set forth in claim 10, wherein a discharge (discharge amount)of the reversible pump of the second hydraulic pressure supply means is set to be different from a discharge (discharge amount) of the reversible pump of the first hydraulic pressure supply means.

(8) A power steering system as set forth in claim 1, which further comprises third and fourth fluid passages, which are provided to supply hydraulic pressure from the second hydraulic pressure supply means to the hydraulic pressure chambers of the hydraulic power cylinder, and wherein the third and fourth fluid passages are connected respectively to the first and second fluid passages upstream of the hydraulic power cylinder, and line lengths and line diameters of the first through fourth fluid passages are set so that a pulsation of hydraulic pressure produced by the first hydraulic pressure supply means and a pulsation of hydraulic pressure produced by the second hydraulic pressure supply means are attenuated.

(9) A power steering system as set forth in claim 1, which further comprises third and fourth fluid passages that supply hydraulic pressure from the second hydraulic pressure supply means to the hydraulic pressure chambers of the hydraulic power cylinder, and wherein the third and fourth fluid passages are connected respectively to the first and second fluid passages upstream of the hydraulic power cylinder, and a discharge timing of working fluid discharged from the first hydraulic pressure supply means and a discharge timing of working fluid discharged from the second hydraulic pressure supply means are set so that a pulsation of hydraulic pressure produced by the first hydraulic pressure supply means and a pulsation of hydraulic pressure produced by the second hydraulic pressure supply means cancel out each other.

(10) A power steering system as set forth in claim 1, wherein the second hydraulic pressure supply means is arranged in parallel with the first hydraulic pressure supply means through the first through fourth fluid passages.

(11) A power steering system as set forth in claim 1, wherein the second hydraulic pressure supply means is arranged in series to the first hydraulic pressure supply means through the first through fourth fluid passages.

(12) A power steering system as set forth in claim 1, wherein the first hydraulic pressure supply means has a working-fluid discharge characteristic substantially identical to a working-fluid discharge characteristic of the second hydraulic pressure supply means.

(13) A power steering system as set forth in claim 12, which further comprises a directional control valve disposed in either one of the first and second fluid passages, and a forcible pressure-accumulation means provided for forcibly accumulating hydraulic fluid pressure in the accumulator by driving the reversible pump and by shifting the directional control valve to a valve closed state, at an initial stage of power steering system control.

(14) A power steering system as set forth in claim 13, which further comprises a pump-failure detection means that detects a failure in the reversible pump simultaneously when forcibly accumulating hydraulic fluid pressure in the accumulator by the forcible pressure-accumulation means.

## Claims

1. A power steering system comprising:
a hydraulic power cylinder that assists a steering force of a steering mechanism turning steered road wheels for steering;
a first hydraulic pressure supply means including a reversible pump relatively supplying hydraulic pressure to first and second hydraulic chambers of the hydraulic power cylinder via first and second fluid passages, associated with the respective hydraulic chambers, and an electric motor driving the reversible pump in a normal-rotational direction or in a reverse-rotational direction;
a steering-state detection means that detects a driver's steering state;
a control unit that outputs a command signal to the motor responsively to the driver's steering state detected by the steering-state detection means; and
a second hydraulic pressure supply means selectively supplying hydraulic pressure to either one of the first and second hydraulic chambers of the hydraulic power cylinder.

2. A power steering system as claimed in claim 1, which further comprises:
a failure detection means, which is provided to detect a failure in the first hydraulic pressure supply means.

3. A power steering system as claimed in claim 2, wherein:
the second hydraulic pressure supply means comes into operation, when the failure in the first hydraulic pressure supply means has been detected by the failure detection means.

4. A power steering system as claimed in claim 3, which further comprises:
third and fourth fluid passages provided to supply hydraulic pressure from the second hydraulic pressure supply means to the first and second hydraulic pressure chambers of the hydraulic power cylinder via the first and second fluid passages, and
a first fluid-passage directional control valve provided at a joined portion of the first and third fluid passages for establishing or blocking fluid communication between the first and third fluid passages; and
a second fluid-passage directional control valve provided at a joined portion of the second and fourth fluid passages for establishing or blocking fluid communication between the second and fourth fluid passages,
wherein, when the first hydraulic pressure supply means is operating normally, the first and second fluid-passage directional control valves operate to block fluid communication between the hydraulic power cylinder and the second hydraulic pressure supply means, and
wherein, when the failure in the first hydraulic pressure supply means has been detected by the failure detection means, the first and second fluid-passage directional control valves operate to establish fluid communication between the hydraulic power cylinder and the second hydraulic pressure supply means.

5. A power steering system as claimed in claim 3, wherein:
the second hydraulic pressure supply means is kept operative for a predetermined operating time by the control unit, and shifted to a stopped state by the control unit when the predetermined operating time has expired.

6. A power steering system as claimed in claim 3, wherein:
the second hydraulic pressure supply means is shifted to a stopped state by the control unit with a gradual reduction in a discharge of working fluid discharged from the second hydraulic pressure supply means.

7. A power steering system as claimed in claim 2, wherein:
the failure detection means detects the failure in the first hydraulic pressure supply means, based on a current value of electric current supplied to the motor.

8. A power steering system as claimed in claim 7, wherein:
the failure detection means detects the failure in the first hydraulic pressure supply means, based on the current value of electric current supplied to the motor, and a steering torque signal concerning steering torque, which is exerted on a steering shaft linked to the steering mechanism and detected by a steering torque detection means.

9. A power steering system as claimed in claim 2, wherein:
the failure detection means detects the failure in the first hydraulic pressure supply means, based on a motor speed of the motor.

10. A power steering system as claimed in claim 1, wherein:
a working-fluid discharge characteristic of the first hydraulic pressure supply means and a working-fluid discharge characteristic of the second hydraulic pressure supply means are set to differ from each other.

11. A power steering system as claimed in claim 1, which further comprises:
a steering shaft linked to the steering mechanism; and
a steering torque detection means that detects steering torque that is exerted on the steering shaft,
wherein only the first hydraulic pressure supply means is operated when the steering torque, detected by the steering torque detection means, is less than a predetermined value.

12. A power steering system as claimed in claim 1, wherein:
the second hydraulic pressure supply means comprises a hydraulic accumulator in which hydraulic pressure is stored by the reversible pump of the first hydraulic pressure supply means, a first switching valve that opens or closes the third fluid passage interconnecting the accumulator and the first hydraulic pressure chamber, and a second switching valve that opens or closes the fourth fluid passage interconnecting the accumulator and the second hydraulic pressure chamber,
wherein, when the first hydraulic pressure supply means is operating normally, the control unit controls hydraulic pressure in each of the hydraulic pressure chambers by driving the reversible pump, and
wherein, when a failure in the first hydraulic pressure supply means occurs, the control unit controls valve operations of the first and second switching valves.

13. A control method of a power steering system employing a hydraulic power cylinder that assists a steering force of a steering mechanism turning steered road wheels for steering, a first hydraulic pressure supply means including a reversible pump relatively supplying hydraulic pressure to first and second hydraulic chambers of the hydraulic power cylinder via first and second fluid passages, associated with the respective hydraulic chambers, and an electric motor driving the reversible pump in a normal-rotational direction or in a reverse-rotational direction, a steering-state detection means that detects a driver's steering state, a control unit that outputs a command signal to the motor responsively to the driver's steering state detected by the steering-state detection means, and a second hydraulic pressure supply means selectively supplying hydraulic pressure to either one of the first and second hydraulic chambers of the hydraulic power cylinder, the method
**characterized in that**:
when a failure in the first hydraulic pressure supply means has been detected by a failure detection means, the control unit initiates an operative step of the second hydraulic pressure supply means so that the second hydraulic pressure supply means comes into operation.

14. A control method of a power steering system as claimed in claim 13, further comprising:
providing third and fourth fluid passages to selectively supply hydraulic pressure from the second hydraulic pressure supply means to either one of the first and second hydraulic pressure chambers;
disposing a first fluid-passage directional control valve in the third fluid passage, and disposing a second fluid-passage directional control valve in the fourth fluid passage;
controlling valve operations of the first and second fluid-passage directional control valves, so that the first and second fluid-passage directional control valves block fluid communication between the hydraulic power cylinder and the second hydraulic pressure supply means, when the first hydraulic pressure supply means is operating normally; and
controlling the valve operations of the first and second fluid-passage directional control valves, so that the first and second fluid-passage directional control valves establish fluid communication between the hydraulic power cylinder and the second hydraulic pressure supply means, when the failure in the first hydraulic pressure supply means has been detected by the failure detection means.

15. A control method of a power steering system as claimed in claim 13, further comprising:
providing an electromagnetic clutch between the reversible pump and the motor; and
uncoupling the reversible pump from the motor via the electromagnetic clutch, when the failure in the first hydraulic pressure supply means has been detected by the failure detection means.

16. A control method of a power steering system as claimed in claim 13, wherein:
the failure detection means comprises:
a current-value detection step that detects a current value of electric current supplied to the motor; and
a current-value based failure diagnostic step that determines that the first hydraulic pressure supply means is failed when the current value of electric current detected by the current-value detection step is out of a predetermined range.

17. A control method of a power steering system as claimed in claim 13, wherein:
the failure detection means comprises:
a motor-speed detection step that detects or estimates a motor speed of the motor; and
a motor-speed based failure diagnostic step that determines that the first hydraulic pressure supply means is failed when the motor speed detected by the motor-speed detection step is out of a predetermined range.

18. A control method of a power steering system as claimed in claim 13, further comprising:
providing a steering torque detection means that detects steering torque exerted on a steering shaft linked to the steering mechanism,
wherein the failure detection means comprises:
a current-value detection step that detects a current value of electric current supplied to the motor;
a steering-torque detection step that estimates the steering torque based on a detected value of the steering torque detection means; and
a comparative determination step that compares the current value with a threshold current value and compares the steering torque with a threshold torque value, and determines, based on comparison results, whether the first hydraulic pressure supply means is failed.

19. A control method of a power steering system as claimed in claim 13, wherein:
the operative step of the second hydraulic pressure supply means comprises a step at which the operation of the second hydraulic pressure supply means is stopped after the second hydraulic pressure supply means has been operated for a predetermined operating time.

20. A control method of a power steering system, as claimed in claim 19, wherein:
the operative step of the second hydraulic pressure supply means comprises:
a step that operates the second hydraulic pressure supply means for a predetermined operating time;
a step that gradually reduces a discharge of hydraulic working fluid discharged from the second hydraulic pressure supply means, from a time when the predetermined operating time has expired; and
a step that stops the operation of the second hydraulic pressure supply means after the predetermined operating time has expired.
